# EUROPÄISCHE PATENTSCHRIFT

(11) **EP 2 596 082 B1**
(45) Veröffentlichungstag und Bekanntmachung des Hinweises auf die Patenterteilung: **04.11.2015**
(21) Anmeldenummer: 11738158.2
(22) Anmeldetag: 29.06.2011
(51) Int. Cl.: C09K 19/02, C09K 19/04, C09K 19/46, C09K 19/06, C09K 19/34, C09K 19/38, C09K 19/20, C09K 19/54

(54) **POLYMERSTABILISIERTE FLÜSSIGKRISTALLMEDIEN UND ANZEIGEN**
POLYMER-STABILIZED LIQUID-CRYSTAL MEDIA AND DISPLAYS
MILIEUX À BASE DE CRISTAUX LIQUIDES STABILISÉS PAR POLYMÈRES ET DISPOSITIFS D'AFFICHAGE

(30) Priorität: 22.07.2010 DE 102010031913
(43) Veröffentlichungstag der Anmeldung: 29.05.2013
(73) Patentinhaber: Merck Patent GmbH, 64293 Darmstadt (DE)
(72) Erfinder: JANSEN, Axel, 64293 Darmstadt (DE); KODEK, Thorsten, 64546 Moerfelden-Walldorf (DE); HAENSEL, Helmut, 64367 Muehltal (DE); DURMAZ, Erdal, 64285 Darmstadt (DE); SPRANG, Julia, 61276 Weilrod (DE)
(86) Internationale Anmeldenummer: PCT/EP2011/003199
(87) Internationale Veröffentlichungsnummer: WO 2012/022388

(56) Entgegenhaltungen:
- EP-A1- 2 380 945
- EP-A2- 0 212 271
- EP-A2- 2 243 812
- WO-A1-2008/061606
- DE-A1-102008 035 889
- DE-A1-102008 036 248
- US-A- 4 792 517
- XIANGFEI KONG ET AL: "Synthesis and liquid crystal properties of triphenylene liquid crystals bearing polymerisable acrylate and methacrylate groups", LIQUID CRYSTALS: AN INTERNATIONAL JOURNAL OF SCIENCE AND TECHNOLOGY, TAYLOR & FRANCIS, GB, Bd. 38, Nr. 8, 1. August 2011 (2011-08-01) , Seiten 943-955, XP001564682, ISSN: 0267-8292, DOI: 10.1080/02678292.2011.587132 [gefunden am 2011-08-12]

## Beschreibung

Die vorliegende Erfindung betrifft Flüssigkristallmedien und Anzeigevorrichtungen enthaltend polymerisierbare Verbindungen, die Verwendung der polymerisierbaren Verbindungen für optische, elektrooptische und elektronische Zwecke, insbesondere in Flüssigkristall (FK)-Medien und FK-Anzeigen mit polymerstabilisierter blauer Phase, sowie in FK-Medien für FK-Anzeigen des PS- oder PSA-Typs ("polymer sustained" bzw. "polymer sustained alignment"). Die polymerisierbaren Verbindungen umfassen ein Ringsystem, das durch drei oder mehrere polymerisierbare Gruppen, jeweils verbunden über eine optionale Abstandsgruppe, funktionalisiert ist.

Im Stand der Technik sind Medien für Anzeigenelemente bekannt, die im Betrieb in der flüssigkristallinen blauen Phase (kurz: blaue Phase) arbeiten. Solche Anzeigen sind beispielsweise in WO 2004/046805 A1 und WO 2008/061606 A1 beschrieben.

Die blaue Phase wird in der Regel am Übergang vom nematischen zum optisch isotropen Zustand beobachtet. Das Medium in der flüssigkristallinen blauen Phase kann blau sein, wie der Name andeutet, aber auch farblos. Ziel bisheriger Anstrengungen war es, den Temperaturbereich der blauen Phase von weniger als einem Grad auf einen praktisch nutzbaren Bereich auszudehnen (vgl. H. Kikuchi et al., Nature Materials (2002), 1(1), 64-68; Kikuchi, H. et al., Polymeric Materials Science and Engineering, (2003), 89, 90-91). Zu diesem Zweck wird im Stand der Technik vorgeschlagen, dem FK-Medium eine polymerisierbare Verbindung beizufügen, welche dann im FK-Medium in situ polymerisiert wird. Das dabei gebildete Polymer oder Polymernetzwerk soll die blaue Phase stablilisieren.

Die bisher im Stand der Technik beschriebenen polymerstabilisierten blauen Phasen verwenden beispielsweise als Monomere ein monoreaktives nicht-mesogenes Monomer zusammen mit einem direaktiven mesogenen Monomer.

WO 2005/080529 A1 beschreibt polymer-stabilisierte blaue Phasen mit mono- und multireaktiven Monomeren.

Der vorliegenden Erfindung lag als eine Aufgabe zugrunde, geeignete Monomere und entsprechende Polymere für die Stabilisierung von blauen Phasen zu finden. Das Polymer soll insbesondere folgende Effekte auf die Eigenschaften der stabilisierten FK-Phase haben:
- breiter Temperaturbereich der blauen Phase,
- schnelle Schaltzeit,
- geringe Betriebsspannung (Vₒₚ),
- geringe Variation der Betriebsspannung mit der Temperatur,
- geringe Hysterese der Transmission einer Zelle bei Änderung der Betriebsspannung zum Erzielen definierter Graustufen.

Es werden außerdem Monomer-Materialien benötigt, die eine gute 'Voltage holding ratio' (VHR) aufweisen, hohe Klärpunkte besitzen, und stabil gegenüber Belastungen durch Licht und Temperatur sind. Weiterhin ist eine gute Löslichkeit in LC-Materialien bzw. eine gute Mischbarkeit mit dem FK-Medium notwendig, um eine gute Verteilung im FK-Medium zu erreichen.

Der vorliegenden Erfindung liegt somit die Aufgabe zugrunde, verbesserte polymerisierbare Verbindungen, sowie solche Verbindungen enthaltende FK-Medien, zur Verfügung zu stellen, insbesondere für die Verwendung in FK-Anzeigen mit einer polymerstabilisierten blauen Phase. Die erfindungsgemäßen polymerisierbaren Verbindungen sollen die blaue Phase stabilisieren. Die erfindungsgemäßen FK-Medien sollen eine oder mehrere verbesserte Eigenschaften, insbesondere ausgewählt aus den oben genannten Eigenschaften, aufweisen. Insbesondere sollen die FK-Medien eine breite blaue Phase aufweisen, ein schnelles Schalten ermöglichen, eine gute Voltage holding ratio (VHR) aufweisen, geringe Spannungen (Vₒₚ) für den Schaltprozess benötigen und eine geringe Hysterese (ΔV) zeigen und einen geringen Memory Effekt (ME) aufweisen. Die FK-Medien sollen stabil gegenüber Belastungen durch Licht- und Temperatur sein.

Weiterhin sind im Stand der Technik sogenannte PS-bzw. PSA-Anzeigen bekannt ("Polymer Sustained" bzw. "Polymer Sustained Alignment"), für die auch gelegentlich der Begriff "Polymer Stabilized" verwendet wird. In diesen Anzeigen wird dem FK-Medium eine geringe Menge (zum Beispiel 0.3 Gew.-%, typischerweise <1 Gew.-%) einer oder mehrerer polymerisierbarer Verbindung(en) zugesetzt, welche nach Einfüllen in die FK-Zelle mit oder ohne angelegte elektrische Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen.

Nachfolgend wir der Begriff "PSA", falls nicht anders angegeben, stellvertretend für PS-Anzeigen und PSA-Anzeigen verwendet.

Mittlerweile wird das PS(A)-Prinzip in diversen klassischen FK-Anzeigen angewendet. So sind beispielsweise PSA-VA-, PSA-OCB-, PSA-IPS-, PSA-FFS- und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem 'pretilt' (Anstellwinkel) in der Zelle. Bei PSA-OCB-Anzeigen beispielsweise kann man erreichen, dass die Bend-Struktur stabilisiert wird, so dass man ohne OffsetSpannung auskommt oder diese reduzieren kann. Im Falle von PSA-VA-Anzeigen wirkt sich der pretilt positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise auch mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in DE 10 2008 035889 A1, DE 10 2008 036248 A1, EP 2 380 945 A1, EP 2 243 812 A2, JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PSA-IPS-Anzeigen sind zum Beispiel in US 6,177,972 und Appl. Phys. Lett. 1999, 75(21), 3264 beschrieben. PSA-TN-Anzeigen sind zum Beispiel in Optics Express 2004, 12(7), 1221 beschrieben.

PSA-Anzeigen können ebenso wie die oben beschriebenen konventionellen FK-Anzeigen als Aktivmatrix- oder Passivmatrix-Anzeigen betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. "thin film transistor" bzw. "TFT"), bei Passivmatrix-Anzeigen üblicherweise nach dem Multiplex-Verfahren, wobei beide Verfahren aus dem Stand der Technik bekannt sind.

Es sind jedoch nicht alle Kombinationen bestehend aus FK-Mischung und polymerisierbarer Komponente für PSA-Anzeigen geeignet, weil sich zum Beispiel kein oder kein ausreichender Tilt einstellt, oder weil zum Beispiel die sogenannte "Voltage Holding Ratio" (VHR oder HR) für TFT-Displayanwendungen unzureichend ist. Zudem hat sich gezeigt, dass bei Verwendung in PSA-Anzeigen die aus dem Stand der Technik bekannten FK-Mischungen und RMs noch einige Nachteile aufweisen. So eignet sich nicht jedes bekannte, in FK-Mischungen lösliche RM zur Verwendung in PSA-Anzeigen.

Darüber hinaus sollte die gewählte Kombination FK-Hostmischung/RM eine möglichst geringe Rotationsviskosität sowie möglichst gute elektrische Eigenschaften aufweisen, insbesondere sollte sie eine möglichst hohe VHR besitzen. Bei PSA-Anzeigen ist vor allem eine hohe VHR nach Bestrahlung mit UV-Licht erforderlich, da die UV-Belichtung ein notwendiger Teil des Herstellungsprozesses der Anzeige ist, aber auch als normale Belastung im Betrieb der fertigen Anzeige auftritt.

Insbesondere wäre es wünschenswert, neue Materialien für PSA-Anzeigen zur Verfügung zu haben, die einen besonders kleinen pretilt-Winkel erzeugen. Hierbei sind Materialien bevorzugt, die während der Polymerisation bei gleicher Belichtungszeit einen niedrigeren 'pretilt'-Winkel erzeugen als die bisher bekannten Materialien, und/oder durch deren Verwendung der mit den bekannten Materialien erzielbare (höhere) 'pretilt'-Winkel bereits nach kürzerer Belichtungszeit erreicht werden kann. Dadurch könnten die Produktionszeit (engl. "tact time") der Anzeige verkürzt und die Kosten des Produktionsprozesses verringert werden.

Ein weiteres Problem bei der Herstellung von PSA-Anzeigen ist das Vorhandensein bzw. die Entfernung von Restmengen unpolymerisierter RMs insbesondere nach dem Polymerisationsschritt zur Erzeugung des pretilt-Winkels in der Anzeige. Beispielsweise können solche nicht abreagierten RMs die Eigenschaften der Anzeige nachteilig beeinflussen, indem sie z.B. nach Fertigstellung der Anzeige während des Betriebes unkontrolliert polymerisieren.

So zeigen die aus dem Stand der Technik bekannten PSA-Anzeigen oft den unerwünschten Effekt des sogenannten "image sticking" oder "image burn", d.h. dass das in der FK-Anzeige durch vorübergehende Ansteuerung einzelner Bildpunkte (pixel) erzeugte Bild auch nach Abschalten des elektrischen Feldes in diesen Bildpunkten, oder nach Ansteuerung anderer Bildpunkte, noch sichtbar bleibt.

Es ist deshalb wünschenswert, dass die Polymerisation der RMs bei der Herstellung der PSA-Anzeige möglichst vollständig abläuft und die Anwesenheit von unpolymerisierten RMs in der Anzeige möglichst ausgeschlossen oder auf ein Minimum reduziert wird. Hierzu werden Materialien benötigt, die eine möglichst effektive und vollständige Polymerisation ermöglichen.

Es besteht somit immer noch ein großer Bedarf an PSA-Anzeigen sowie FK-Medien und polymerisierbaren Verbindungen zur Verwendung in solchen Anzeigen, welche die oben beschriebenen Nachteile nicht oder nur in geringem Maße zeigen und verbesserte Eigenschaften besitzen. Zudem besteht ein großer Bedarf nach PSA-Anzeigen, sowie Materialien zur Verwendung in PSA-Anzeigen, die vorteilhate Eigenschaften aufweisen, insbesondere einen hohen spezifischen Widerstand bei gleichzeitig großem Arbeitstemperaturbereich, kurze Schaltzeiten auch bei tiefen Temperaturen und niedriger Schwellenspannung, einen niedrigen pretilt-Winkel, eine Vielzahl von Graustufen, einen hohen Kontrast und einen weiten Blickwinkel ermöglichen, sowie hohe Werte der "voltage holding ratio" (VHR) nach UV-Belastung und der Tieftemperaturstabilität, auch als "LTS" (low temperature stability) bezeichnet, d.h. der Stabilität der FK-Mischung gegen spontane Auskristallisation einzelner Komponenten.

Der Erfindung liegt als eine Aufgabe zugrunde, verbesserte polymerstabilisierte FK-Anzeigen zu realisieren. Der Erfindung liegt somit die weitere Aufgabe zugrunde, neue geeignete Materialien, insbesondere RMs und diese enthaltende FK-Medien, für die Verwendung in PSA-Anzeigen bereitzustellen, die die oben angegebenen Nachteile nicht oder in geringerem Maße aufweisen, möglichst schnell und vollständig polymerisieren, eine möglichst schnelle Einstellung eines niedrigen pretilt-Winkels ermöglichen, das Auftreten von "image sticking" in der Anzeige verringern oder vermeiden, und vorzugsweise gleichzeitig sehr hohe spezifische Widerstände, niedrige Schwellenspannungen und niedrige Schaltzeiten ermöglichen. Zudem sollten die FK-Medien günstige FK-Phaseneigenschaften sowie hohe VHR- und LTS-Werte aufweisen.

Die oben beschriebenen Aufgaben wurden erfindungsgemäß gelöst durch die Bereitstellung von Materialien, Verfahren und FK-Anzeigen wie in der vorliegenden Anmeldung beschrieben. Insbesondere wurde überraschend gefunden, dass die oben beschriebenen Aufgaben teilweise oder vollständig gelöst werden können, indem man zur Herstellung solcher FK-Anzeigen FK-Medien verwendet, welche eine oder mehrere erfindungsgemäße polymerisierbare Verbindungen wie nachstehend beschrieben enthalten, bzw. indem man FK-Anzeigen mit blauer Phase bzw. PSA-Anzeigen bereitstellt, die eine oder mehrere erfindungsgemäße Verbindungen in polymerisierter Form enthalten.

Die verwendeten, und soweit neu gefundenen, erfindungsgemäßen polymerisierbaren Verbindungen enthalten einen zentralen Ring oder ein Ringsystem und mindestens drei polymerisierbare Gruppen, welche mit dem Ring(system) direkt oder über Abstandsgruppen (engl. "spacer") verknüpft sind.

Die Verwendung der erfindungsgemäßen polymerisierbaren Verbindungen in erfindungsgemäßen FK-Medien für FK-Anzeigen mit polymerstabilisierter blauer Phase führt zu einer deutlichen Stabilisierung der blauen Phase. Zudem hat sich überraschend gezeigt, dass bei der Verwendung der erfindungsgemäßen polymerisierbaren Verbindungen in FK-Medien mit polymerstabilisierter blauer Phase eine deutliche Verringerung der Hysterese (ΔV₅₀) und eine Erhöhung des Kontrastes erzielt wird, im Vergleich zu polymerisierbaren Verbindungen und FK-Medien wie im Stand der Technik beschrieben.

In PSA-Anzeigen führt die Verwendung der erfindungsgemäßen polymerisierbaren Verbindungen in erfindungsgemäßen FK-Medien zu einem besonders schnellen Erreichen des gewünschten Pretilts und zu deutlich verkürzten Zeiten bei der Herstellung der Anzeige.

Im Stand der Technik sind zahlreiche Verbindungen bekannt, die aus einem carbocyclischen Ring mit einer oder zwei angehängten polymerisierbaren Gruppen bestehen. Verbindungen basierend auf Cyclohexanringen werden in der WO 2008/061606 und US 4767883 beschrieben. Verbindungen dieses Typs werden auch in flüssigkristallinen Mischungen eingesetzt, z.B. zur Herstellung von Filmen mit besonderen optischen Eigenschaften.

Bekannt sind auch cyclische Verbindungen mit drei oder mehr reaktiven Gruppen, z.B. in der EP 212271. Weiterhin werden Benzolderivate mit drei reaktiven Acrylatgruppen in den Druckschriften US 4792517 und US 2008/081133 und CN 101008784 offenbart.

Die Verwendung in FK-Medien mit blauer Phase oder in Anzeigen vom PS-/PSA-Typ wird jedoch in keiner dieser Druckschriften offenbart noch nahegelegt.

Somit werden im Stand der Technik polymerstabilisierte blaue Phasen für FK-Medien mit einer reaktiven Komponente, die vorzugsweise aus erfindungsgemäßen polymerisierbaren Verbindungen besteht, weder beschrieben noch nahegelegt.

Ein Gegenstand der vorliegenden Erfindung sind flüssigkristalline Medien, welche ein Polymer, das mindestens eine polymerisierte Monomer-Komponente der Formel I, wie unten und in den Ansprüchen, und gegebenenfalls weitere polymerisierte Monomere umfasst, enthalten, oder welche mindestens ein nicht-polymerisiertes Monomer der Formel I enthalten, oder beides.

Ein weiterer Gegenstand der Erfindung ist die Verwendung von Verbindungen der Formel I 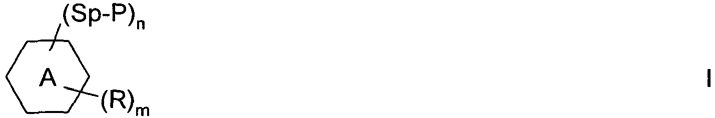 worin
- R: a) jeweils unabhängig voneinander einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind,
b) eine Gruppe -Sp-P, oder
c) F, Cl, H, Br, CN, SCN, NCS oder SF₅ bedeuten, bevorzugt eine Gruppe gemäß a) oder b).
- A: a) Cyclohexan oder Cyclohexen,
b) Benzol, worin eine oder zwei CH-Gruppen durch N ersetzt sein können,
   oder
c) ein Rest aus der Gruppe Bicyclo[1.1.1]pentan, Bicyclo[2.2.2]octan, Spiro[3.3]heptan, Dioxan, Selenophen, Thiophen, Furan, Anthracen, Phenanthren, Chroman, Adamantan, 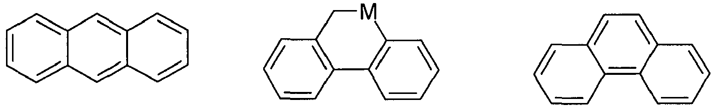 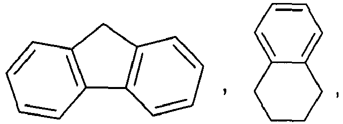 worin
   eine oder mehrere Doppelbindungen durch Einfachbindungen ersetzt sein können,
   ein oder mehrere CH-Gruppen durch N ersetzt sein können,
   M -O-, -S-, -CH₂-, -CHY- oder -CYY¹-, und
   Y und Y¹ Cl, F, CN, OCF₃ oder CF₃ bedeuten,
- m: 0, 1, 2 oder 3, für polycyclische Ringe A auch mehr, bevorzugt 0, 1, 2 oder 3, besonders bevorzugt 0,
- n: 3,4 oder mehr, bevorzugt 3 oder 4, besonders bevorzugt 3,
- P: eine polymerisierbare Gruppe,
- Sp: eine Abstandsgruppe
bedeuten,
oder eines Polymers erhältlich durch Polymerisation einer oder mehrerer Verbindungen der Formel I, in elektro-optischen Vorrichtungen, bevorzugt in FK-Anzeigen mit blauer Phase oder in FK-Anzeigen des PS- oder PSA-Typs.

Das Polymer des Mediums und der Anzeige kann ausschließlich aus Monomeren der Formel I gebildet sein, oder ein Copolymer mit anderen Polymeren sein.

Alle angegebenen Ringsysteme A können an beliebiger Stelle durch die Gruppen R und -Sp-P an Stelle eines Wasserstoffatoms substituiert sein.

Die Anzahl der polymerisierbaren Gruppen P beträgt laut Formel I drei oder mehr.

Ein weiterer Gegenstand der Erfindung ist die Verwendung von FK-Medien enthaltend eine oder mehrere Verbindungen der Formel I in elektrooptischen Vorrichtungen, bevorzugt in FK-Anzeigen mit blauer Phase oder in FK-Anzeigen des PS- oder PSA-Typs.

Ein weiterer Gegenstand der Erfindung ist ein Verfahren zur Herstellung eines FK-Mediums wie vor- und nachstehend beschrieben, indem man eine oder mehrere niedermolekulare flüssigkristalline Verbindungen, oder eine FK-Hostmischung wie vor- und nachstehend beschrieben, mit einer oder mehreren Verbindungen der Formel I und gegebenenfalls mit weiteren flüssigkristallinen Verbindungen und/oder Additiven, mischt und gegebenenfalls polymerisiert.

Ein weiterer Gegenstand der Erfindung ist die Verwendung von Verbindungen der Formel I und diese enthaltende erfindungsgemäße FK-Medien in FK-Anzeigen zur Stabilisierung der blauen Phase, insbesondere über einen möglichst großen Temperaturbereich, vorzugsweise indem man die Verbindungen der Formel I in der FK-Anzeige polymerisiert.

Ein weiterer Gegenstand der Erfindung ist die Verwendung von Verbindungen der Formel I und diese enthaltende erfindungsgemäße FK-Medien in PS- und PSA-Anzeigen zur Erzeugung eines Tiltwinkels im FK-Medium durch in situ-Polymerisation der Verbindung(en) der Formel I in der PSA-Anzeige, vorzugsweise unter Anlegen eines elektrischen oder magnetischen Feldes.

Ein weiterer Gegenstand der Erfindung ist eine FK-Anzeige enthaltend eine oder mehrere Verbindungen der Formel I, ein Polymer erhältlich durch Polymerisation einer oder mehrerer Verbindungen der Formel I oder ein erfindungsgemäßes FK-Medium, insbesondere eine PS- oder PSA-Anzeige, besonders bevorzugt eine Anzeige mit blauer Phase, eine PSA-VA-, PSA-OCB-, PSA-IPS-, PSA-FFS- oder PSA-TN-Anzeige.

Ein weiterer Gegenstand der Erfindung ist eine FK-Anzeige des PS- oder PSA-Typs, enthaltend eine FK-Zelle mit zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium, vorzugsweise unter Anlegen einer elektrischen Spannung an die Elektroden, dadurch gekennzeichnet, dass mindestens eine der polymerisierbaren Verbindungen aus Formel I ausgewählt ist.

Ein weiterer Gegenstand der Erfindung ist ein Verfahren zur Herstellung einer FK-Anzeige wie vor- und nachstehend beschrieben, indem man ein FK-Medium, enthaltend eine oder mehrere niedermolekulare flüssigkristalline Verbindungen oder eine FK-Hostmischung wie vor- und nachstehend beschrieben sowie eine oder mehrere polymerisierbare Verbindungen wovon mindestens eine aus Formel I ausgewählt ist, in eine FK-Zelle mit zwei Substraten und zwei Elektroden wie vor- und nachstehend beschrieben füllt, und die polymerisierbaren Verbindungen, vorzugsweise unter Anlegen einer elektrischen Spannung an die Elektroden, polymerisiert.

Die erfindungsgemäßen PS- und PSA-Anzeigen weisen zwei Elektroden, vorzugsweise in Form von transparenten Schichten, auf, wobei diese auf einem oder beiden der Substrate aufgebracht sind, die die FK-Zelle bilden. Dabei ist entweder jeweils eine Elektrode auf je einem der beiden Substrate aufgebracht, wie zum Beispiel in erfindungsgemäßen PSA-VA-, PSA-OCB- oder PSA-TN-Anzeigen, oder beide Elektroden sind auf nur einem der beiden Substrate aufgebracht, während das andere Substrat keine Elektrode aufweist, wie zum Beispiel in erfindungsgemäßen PSA-IPS- oder PSA-FFS-Anzeigen.

Ein weiterer Gegenstand der Erfindung sind Verbindungen der Formel I, die nicht bereits im Stand der Technik bekannt sind.

Bevorzugt bedeutet der Ring 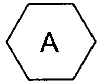 eine Gruppe ausgewählt aus 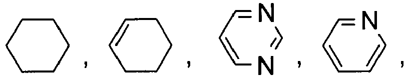 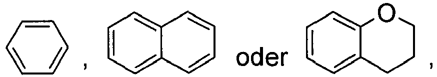 besonders bevorzugt ausgewählt aus

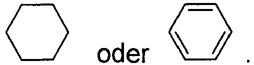

Die Gruppen R bedeuten unabhängig voneinander bevorzugt Halogen oder verzweigtes Alkyl, Alkenyl, Alkoxy mit 1 bis 12 C-Atomen, besonders bevorzugt Fluor oder geradkettiges Alkyl oder Alkoxy mit mit 1 bis 12 C-Atomen, besonders bevorzugt mit 1 bis 5 C-Atomen. Ganz besonders bevorzugt ist R Fluor, Methyl oder Ethyl.

Die Anzahl der an einen Ring A angebrachten Einheiten P-Sp richtet sich nach der Anzahl der Kohlenstoffatome im Ring. Jede CH-Einheit kann gegen C-P-Sp ersetzt sein, und jede CH₂-Einheit kann gegen CH-Sp-P oder C(Sp-P)₂ ersetzt sein, wobei CH-Sp-P bevorzugt ist. Für die besonders bevorzugten Ausführungsformen mit einem Ring A gleich einem Cyclohexanrest kann n somit Werte von 3 - 12 annehmen. Bevorzugt ist n 3-6, besonders bevorzugt 3 oder 4. Ganz besonders bevorzugt ist n gleich 3. Für die besonders bevorzugten Ausführungsformen mit einem Ring A gleich einem Benzolrest kann n somit Werte von 3 - 6 annehmen. Besonders bevorzugt ist n gleich 3 oder 4. Ganz besonders bevorzugt ist n gleich 3.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen.

Bevorzugte Gruppen P sind ausgewählt aus CH₂=CW¹-CO-O-, CH₂=CW¹-CO-, 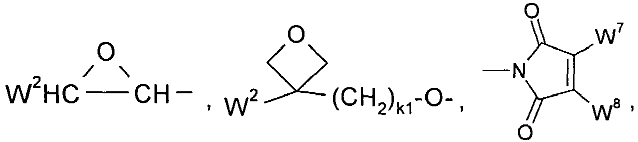 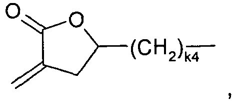 CH₂=CW²-(O)ₖ₃-, CW¹=CH-CO-(O)ₖ₃-, CW¹=CH-CO-NH-, CH₂=CW¹-CO-NH-,CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH₂CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit ein oder mehreren, von P-Sp- verschiedenen Resten L wie oben definiert substituiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet..

Besonders bevorzugte Gruppen P sind CH₂=CW¹-COO-, insbesondere CH₂=CH-COO-, CH₂=C(CH₃)-COO- und CH₂=CF-COO-, ferner CH₂=CH-O-, (CH₂=CH)₂CH-OCO-, (CH₂=CH)₂CH-O-, 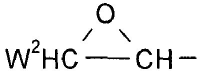 und

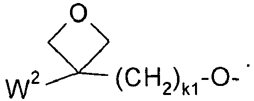

Ganz besonders bevorzugte Gruppen P sind Vinyloxy, Acrylat, Methacrylat, Fluoracrylat, Chloracrylat, Oxetan und Epoxy, insbesondere Acrylat und Methacrylat.

Die erfindungsgemäßen Monomere eigenen sich je nach Anzahl der polymerisierbaren Gruppen pro Molekül zur Ausbildung von unterschiedlich stark vernetzten Polymeren. Enthalten Sie nur eine polymersierbare Gruppe, so bilden sie Polymerketten. Bevorzugt enthalten sie wenigstens teilweise zwei oder mehr polymerisierbare Gruppen und dienen als Quervernetzer. Bevorzugt enthalten die Verbindungen der Formel I 3, 4 oder 5 polymerisierbare Gruppen. Besonders bevorzugt enthalten sie 3 oder 4 polymerisierbare Gruppen.

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren flüssigkristallinen oder mesogenen Verbindung die mesogene Gruppe und die polymerisierbare(n) Gruppe(n) miteinander verbindet.

Bevorzugte Abstandsgruppen Sp sind ausgewählt aus der Formel Sp'-X, so dass der Rest P-Sp- der Formel P-Sp'-X- entspricht, wobei
- Sp': Alkylen mit 1 bis 24, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -NR⁰-, -SiR⁰⁰R⁰⁰⁰-, -CO-, -COO-, -OCO-, -OCO-O-, -S-CO-, -CO-S-, -NR⁰⁰-CO-O-, -O-CO-NR⁰⁰-, -NR⁰⁰-CO-NR⁰⁰-, -CH=CH- oder -C≡C- ersetzt sein können, dass O- und/oder S-Atome nicht direkt miteinander verknüpft sind,
- X: -O-, -S-, -CO-, -COO-, -OCO-, -O-COO-, -CO-NR⁰⁰-, -NR⁰⁰-CO-, -NR⁰⁰-CO-NR⁰⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-COO-, -OCO-CH=CH- oder eine Einfachbindung bedeutet, vorzugsweise eine Einfachbindung, -O-, -OCO- oder -OCH₂-,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.
- X: ist vorzugsweise -O-, -S -CO-, -COO-, -OCO-, -O-COO-, -CO-NR⁰-, -NR⁰-CO-, -NR⁰-CO-NR⁰- oder eine Einfachbindung.

Typische Abstandsgruppen Sp' sind beispielsweise -(CH₂)ₚ₁-, -(CH₂CH₂O)ₚ₂, -CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 24 ist, p2 eine ganze Zahl von 1 bis 6 ist, und R⁰⁰ und R⁰⁰⁰ die oben angegebenen Bedeutungen besitzen.

Besonders bevorzugte Gruppen -X-Sp'- sind -(CH₂)ₚ₁-, -O-(CH₂)ₚ₁-, -OCO-(CH₂)ₚ₁-, -OCOO-(CH₂)ₚ₁-.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Die erfindungsgemäßen Verbindungen eignen sich hervorragend als polymerisierbare Komponenten in flüssigkristallinen Medien. Das Polymer erfüllt in jeder Hinsicht die in der Aufgabe gestellten Anforderungen an die Stabilisierung von flüssigkristallinen Phasen, insbesondere von blauen Phasen. Gegenüber herkömmlichen Systemen wird eine deutliche Verringerung der Betriebsspannungen beobachtet. Gleichzeitig verringert sich die Tendenz zur Ausbildung von Hysteresen in der Transmission (Grauwerten) abhängig von der (ansteigenden oder abfallenden) Betriebsspannung. Außerdem lassen sie sich in vielen Fällen einfach aus kommerziellen Ausgangsverbindungen herstellen.

Besonders bevorzugte Verbindungen der Formel I leiten sich ab von Ausgangsmaterialien enthaltend Hydroxylgruppen oder Carbonsäurefunktionen. Diese Verbindungen sind für eine nachfolgende Funktionalisierung besonders geeignet. Im einfachsten Fall sind drei oder mehr dieser Gruppen direkt an den Ring A gebunden.

Hier und im Folgenden wird eine planare Schreibweise gewählt. Bevorzugt im Sinne der vorliegenden Erfindung sind jedoch alle möglichen Stereoisomere (Enantiomere und Diastereoisomere) die sich durch die Stellung der Substituenten am Ring ergeben. Diese können stereoisomerenrein oder als Gemische von Stereoisomeren vorliegen.

Besonders bevorzugte erfindungsgemäße Verbindungen leiten sich beispielsweise ab von:

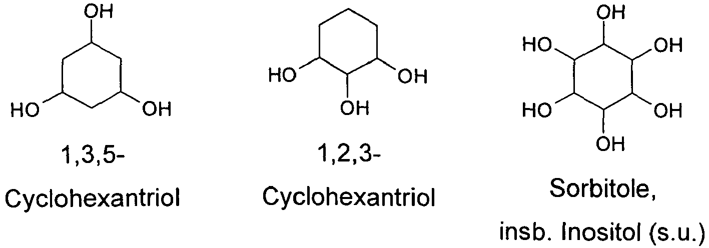

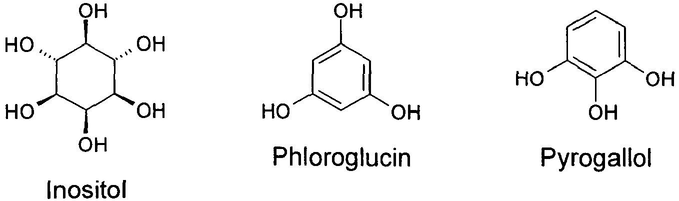

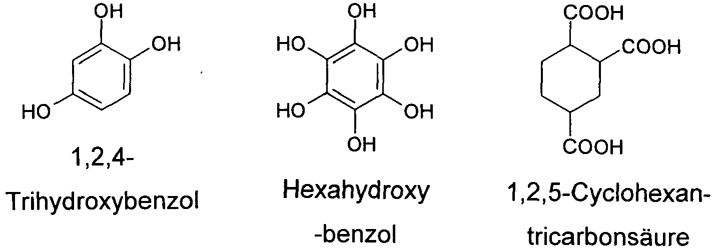

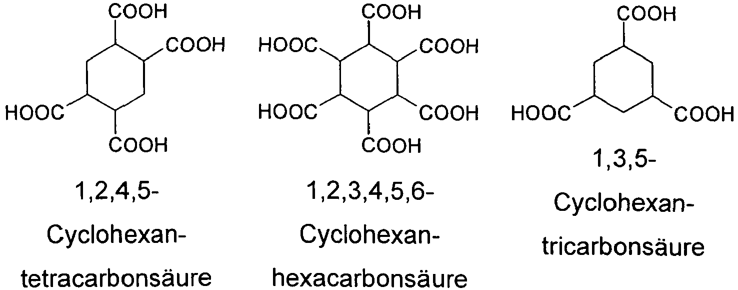

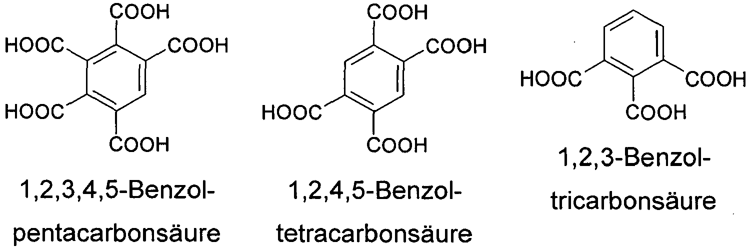

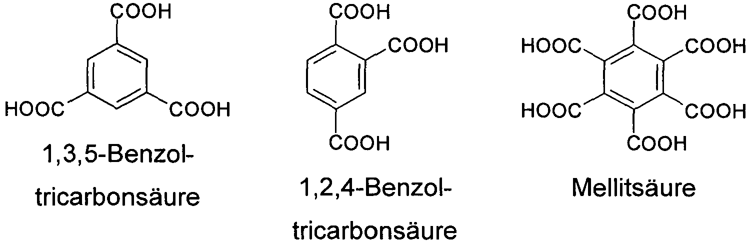

Weiterhin können Hydroxy- oder Säurefunktionen auch indirekt, über Spacer (z.B. Methylen) an den Ring gebunden sein. Bevorzugte erfindungsgemäße Verbindungen leiten sich beispielsweise ab von:

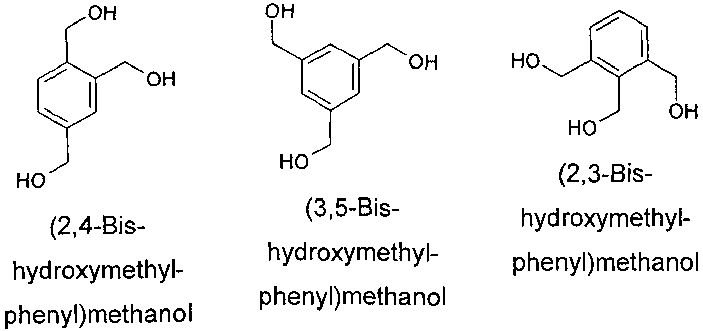

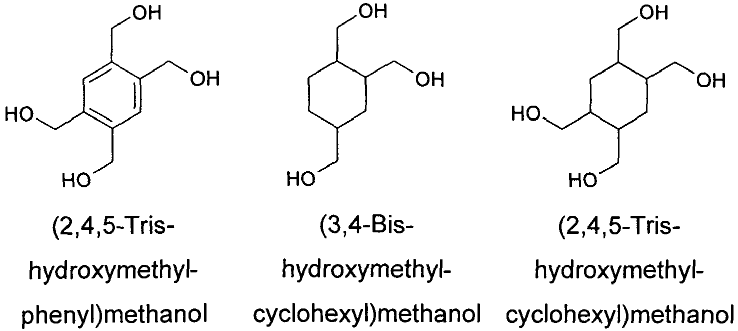

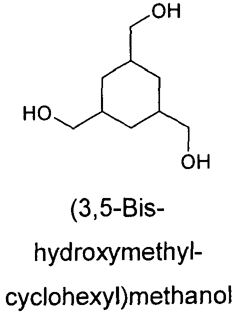

Die Anbringung der zur weiteren Funktionalisierung bevorzugten Gruppen kann, wie oben, einheitlich sein oder es können Ausgangsmaterialien mit unterschiedlichen Hydroxy- oder Säurefunktionen für die Synthese der Verbindungen I herangezogen werden. Weiterhin können weitere Substituenten angebracht sein. Erfindungsgemäße Verbindungen leiten sich beispielsweise ab von:

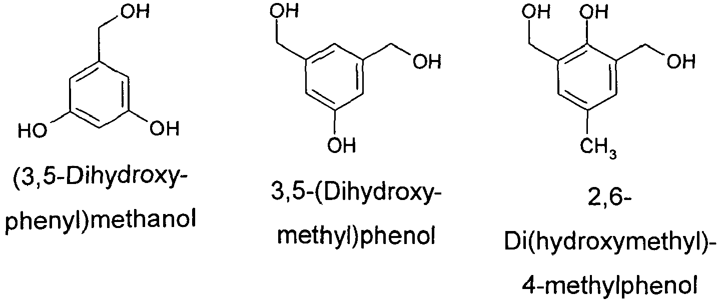

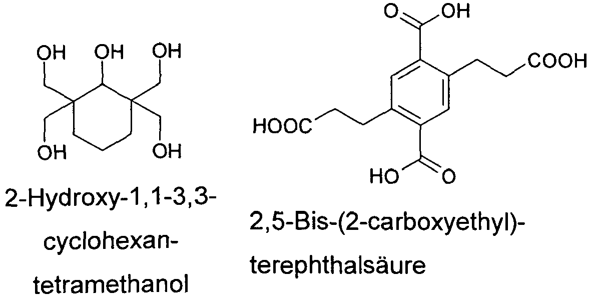

Weiterhin sind auch Ausgangsmaterialien bevorzugt, die sowohl Hydroxyals auch Carbonsäure- oder auch Carbonsäureesterfunktionen enthalten. Aus Estern können, ggfs. auch erst im weiteren Syntheseverlauf leicht zu den entsprechenden Carbonsäuren verseift werden. Erfindungsgemäße Verbindungen leiten sich beispielsweise ab von:

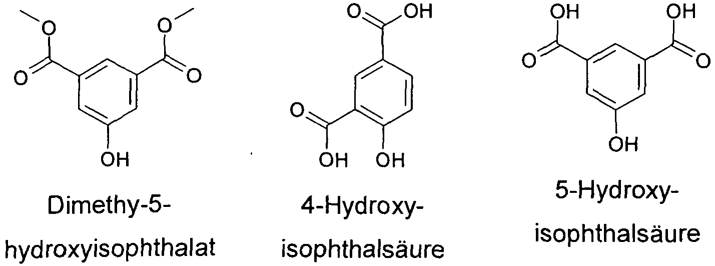

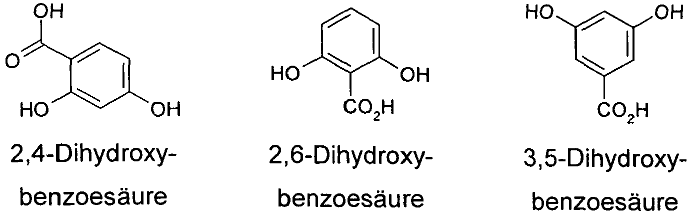

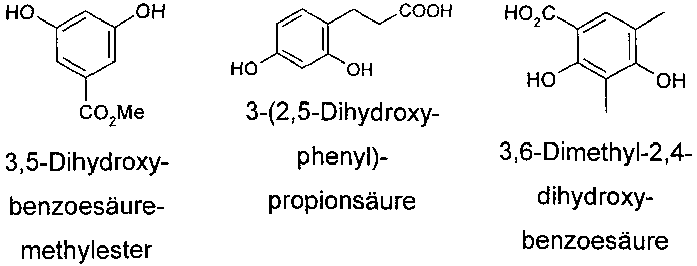

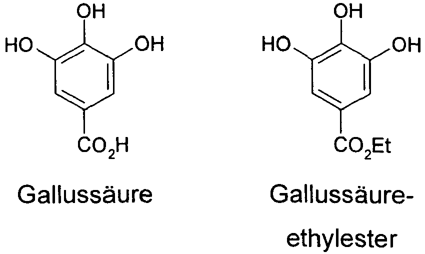

Ebenfalls bevorzugt sind auch Verbindungen mit verzweigten Ketten die mehrere funktionelle Gruppen aufweisen. Dies sind beispielsweise Verbindungen vom Malonattyp. Erfindungsgemäße Verbindungen leiten sich beispielsweise ab von:

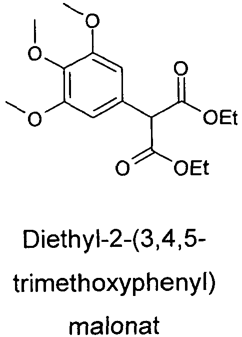

Hier können die Methylethergruppen im Laufe der Synthese zu Hydroxygruppen gespalten werden.

Ebenso sind Materialien bevorzugt die weitere zur Funktionalisierung geeignete Gruppen enthalten, z.B. Aldehydfunktionen oder Halogen. Erfindungsgemäße Verbindungen leiten sich beispielsweise ab von:

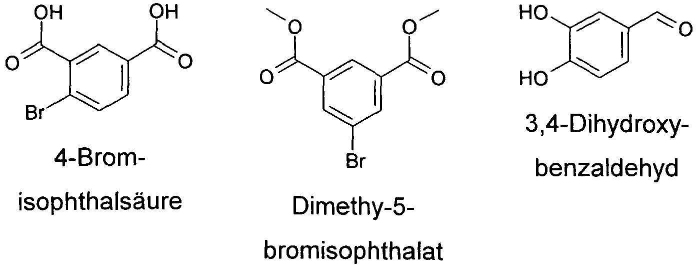

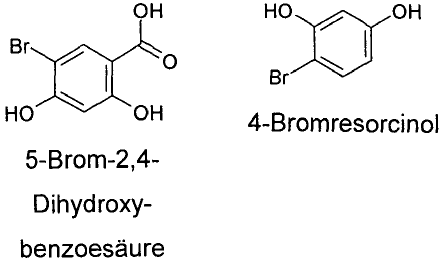

Besonders bevorzugt sind auch Arylbromide bzw. Arylhalogenide bevorzugte Ausgangsmaterialien zur Synthese der Verbindungen I. Erfindungsgemäße Verbindungen leiten sich beispielsweise ab von:

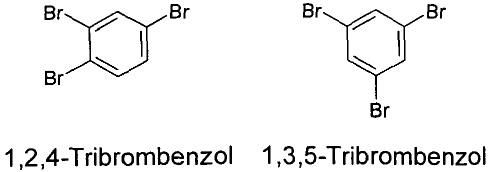

Besonders bevorzugte Strukturen I werden im Folgenden in den Unterformeln IA-1 bis IA-9 wiedergegeben, dabei wird eine planare Schreibweise gewählt. Bevorzugt im Sinne der vorliegenden Erfindung sind jedoch alle möglichen Stereoisomere (Enantiomere und Diastereoisomere) die sich durch die Stellung der Substituenten am Ring ergeben. Diese können stereoisomerenrein oder als Gemische von Stereoisomeren vorliegen.

Sp¹⁻⁶, P¹⁻⁶ und R¹⁻⁶ nehmen die für P, Sp und R angegebene Bedeutungen sowie die jeweils bevorzugten Bedeutungen an. Sp¹⁻⁶, P¹⁻⁶ und R¹⁻⁶ können jeweils zueinander gleich oder verschieden voneinander sein. P¹⁻⁶ bedeuten besonders bevorzugt Acrylat oder Methacrylat. R¹⁻⁶ bedeuten bevorzugt Wasserstoff, Halogen, geradkettiges oder verzweigtes Alkyl, Alkenyl, Alkoxy mit 1 bis 12 C-Atomen. R¹⁻⁶ bedeuten besonders bevorzugt geradkettiges Wasserstoff, Fluor, Alkyl oder Alkoxy mit 1 bis 5 C-Atomen. Ganz besonders bevorzugt bedeuten R¹⁻⁶ Wasserstoff, Fluor oder Methyl darunter nochmals bevorzugt Wasserstoff.

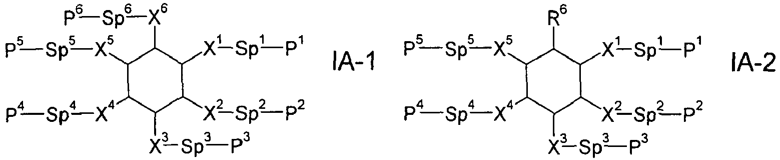

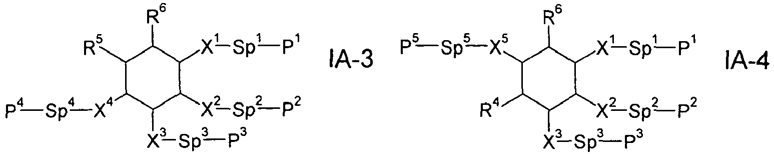

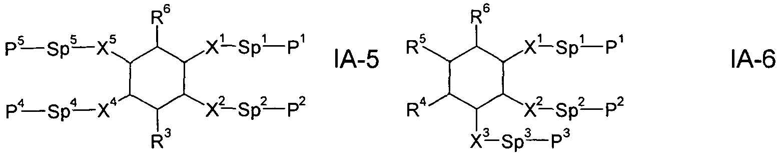

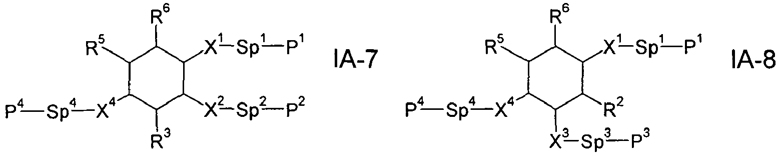

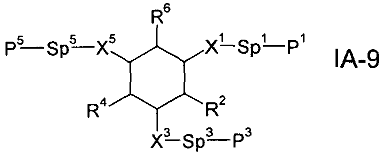

Besonders bevorzugte Strukturen I werden im Folgenden in den Unterformeln IB-1 bis IB-9 wiedergegeben. Sp¹⁻⁶, P¹⁻⁶ und R¹⁻⁶ nehmen die für P, Sp und R angegebene Bedeutungen sowie die jeweils bevorzugten Bedeutungen an. Sp¹⁻⁶, P¹⁻⁶ und R¹⁻⁶ können jeweils zueinander gleich oder verschieden voneinander sein. P¹⁻⁶ bedeuten besonders bevorzugt Acrylat oder Methacrylat. R¹⁻⁶ bedeuten bevorzugt Wasserstoff, Halogen, geradkettiges oder verzweigtes Alkyl, Alkenyl, Alkoxy mit 1 bis 12 C-Atomen. R¹⁻⁶ bedeuten besonders bevorzugt geradkettiges Wasserstoff, Fluor, Alkyl oder Alkoxy mit 1 bis 5 C-Atomen. Ganz besonders bevorzugt bedeuten R¹⁻⁶ Wasserstoff, Fluor oder Methyl darunter nochmals bevorzugt Wasserstoff.

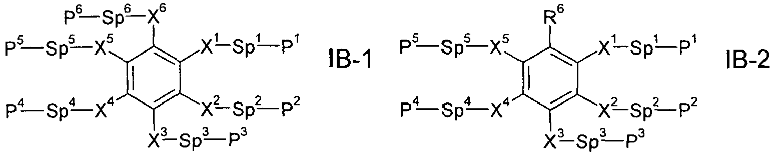

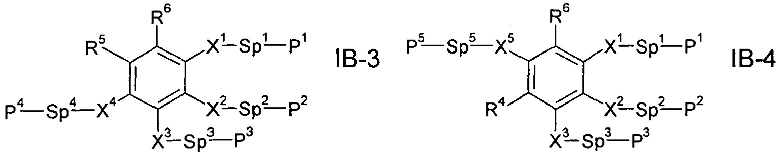

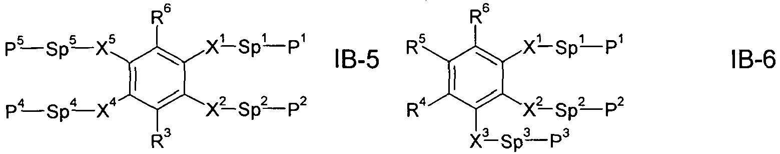

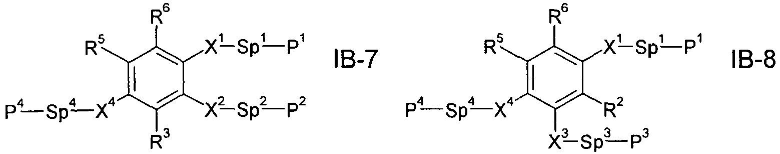

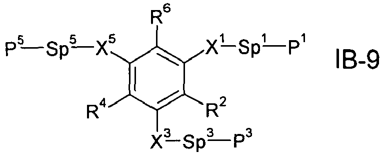

Ausgewählte Syntheseverfahren werden beispielhaft ausgehend von besonders bevorzugten Ausgangsmaterialien beschrieben. Im Speziellen werden Syntheseverfahren anhand von Cyclohexan-1,3,5-triol (**1**), Cyclohexan-1,2,3-triol (**12**), (3,4-Bis-hydroxymethyl-cyclohexyl)methanol (**18**), Phloroglucin (**20**), (2,4,5-Tris-hydroxymethyl-phenyl)methanol (**28**), 1,2,4-Trihydroxybenzol (**30**), 3,5-(Dihydroxy-methyl)phenol (**32**), 1,2,4-Benzol-tricarbonsäure (**34**), 2,5-Bis-(2-carboxyethyl)-terephthalsäure (**37**), 1,2,4,5-Cyclohexantetracarbonsäure (**40**), 1,3,5-Tribrombenzol (**43**), 5-Hydroxy-isophthalsäure (**48**) und 4-Bromresorcinol (**51**) beispielhaft beschrieben. Dies soll die vorliegende Erfindung erläutern aber nicht beschränken. Der Fachmann kann die beschriebenen Methoden auf andere Ausgangsmaterialien leicht übertragen.

Weiterhin wird hier insbesondere auf die Verbindungen vom Typ **I** eingegangen, die die besonders bevorzugten polymeriserbaren Gruppen vom Acrylattyp aufweisen (P gleich CH₂=CW¹-COO-). Darunter sind Acrylate (W¹ = H) und Methacrylate (W¹ = CH₃) ganz besonders bevorzugt.

Zum Aufbau von Spacern werden maßgeblich Hydroxyfunktionen oder Carbonsäurefunktionen genutzt. Dadurch wird -O- bzw. -COO- als Teil des Spacers -Sp'-X'-vorgegeben. Solche Verbindungen sind besonders bevorzugt.

### Beispiele für den Aufbau von Spacern ausgehend von Hydroxyverbindungen

In einem besonders bevorzugten Verfahren erfolgt der Aufbau von Spacern Sp'-X gleich -OC(O)-(CH₂)ₚ₁- durch eingehende Veresterung mit ω-Bromalkansäuren **2.** Der Lokant ω bedeutet hier und im Folgenden, dass sich der Substituent (hier Brom) am Ende der Kette befindet wie z.B. in 5-Bromvaleriansäure = 5-Brompentansäure. Die dadurch erhaltenen Verbindungen **3** können dann durch Umsetzung mit Acrylsäuren **4** (W¹ = H oder.Me sind bevorzugt) zu polymerisierbaren Verbindungen vom Typ **I** (z.B. Verbindung **5** in **Schema 1**) umgesetzt werden.

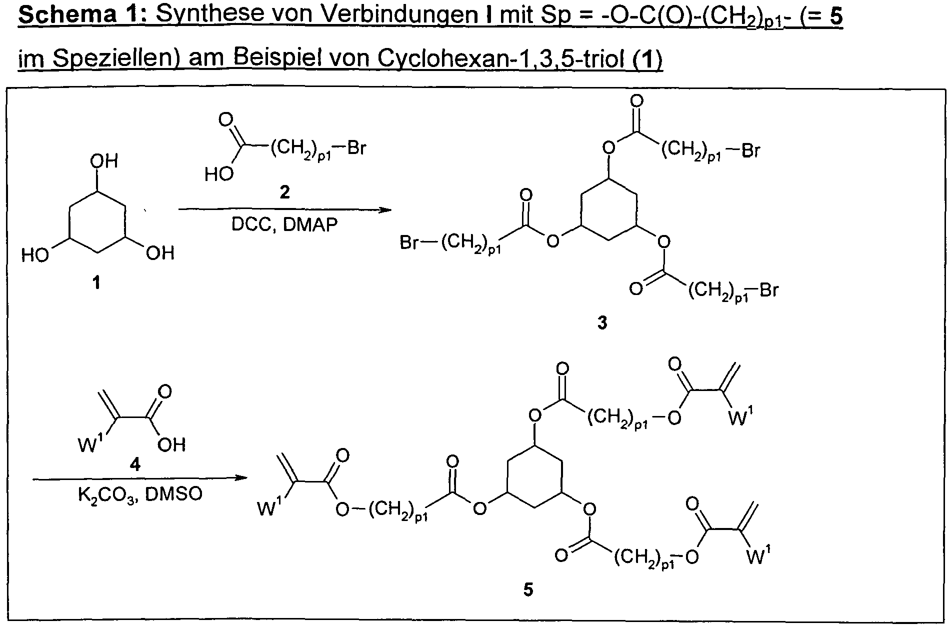

Für die Synthese der Zwischenstufen **3** können auch ω-Bromalkansäurechloride verwendet werden. Diese gehen aus den Carbonsäuren **2** beispielsweise durch Umsetzung mit Thionylchlorid hervor.

Weitere bevorzugte Verbindungen sind solche mit Sp'-X = -O-(CH₂)ₚ₁-, wobei der Parameter p1 bevorzugt größer zwei ist.

Eine Methode um zu den besonders bevorzugten Verbindungen mit p1 = 3 zu gelangen ist in **Schema 2,** wiederum am Beispiel der Umsetzung von Cyclohexan-1,3,5-triol (**1**) aufgezeigt.

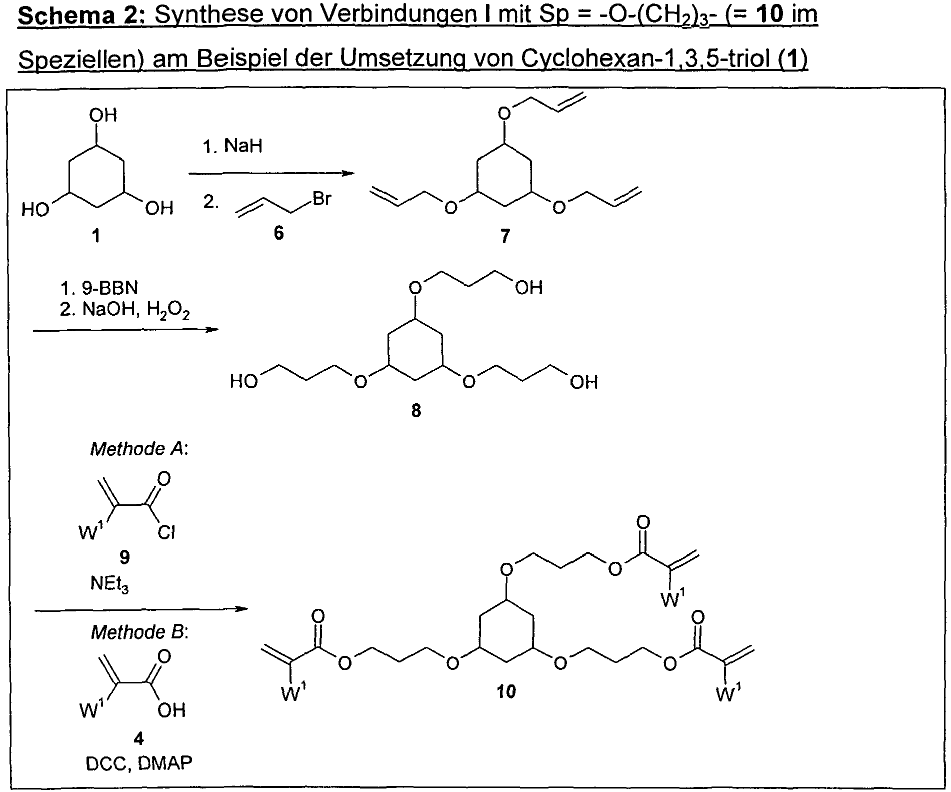

Zunächst wird **1** mit Allylbromid (**6**) alkyliert / allyliert. Allylbromid (**6**) ist ein ausreichend starkes Alkylierungsmittel, um auch die sekundären Alkoholfunktionen effektiv und vollständig zu alkylieren. Zum Aufbau des 1,3-Propylenglycol-Spacers erfolgt dann eine Hydroborierung-Oxidationsreaktion zu Verbindung **8.** Verbindung **8** wird dann entweder mit Acrylsäurechloriden **9** (*Methode A*) oder Acrylsäuren **4** (*Methode B*) unter Erhalt der Verbindungen **10** verestert. Diese Reaktionsfolge kann mit anderen im Sinne dieser Erfindung bevorzugten Ausgangsmaterialien analog durchgeführt werden.

Die freien OH-Gruppen der 1,n-Glycolspacer können auch zu den entsprechenden Bromiden **11** umgesetzt werden. Solche Verbindungen sind ebenfalls wertvolle Zwischenstufen zur Synthese von Verbindungen **I.**

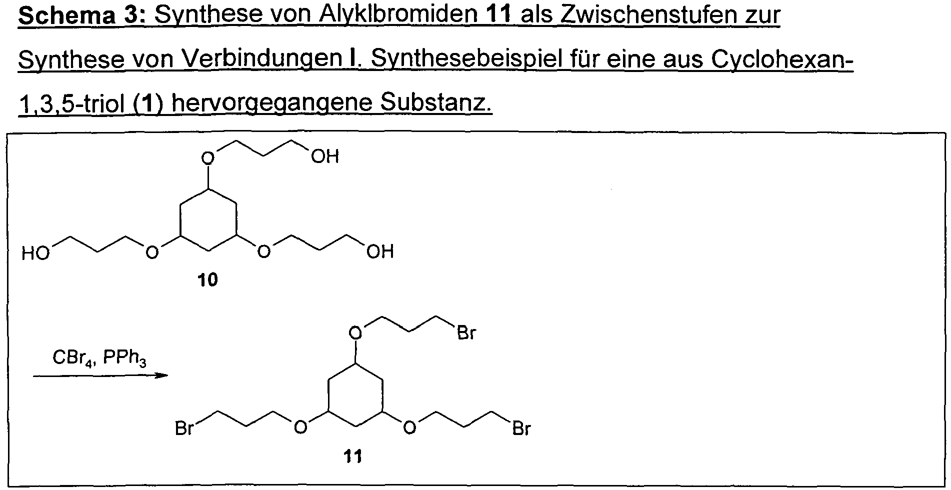

Solche oder ähnliche Alkylbromide können mit Kohlenstoffnucleophilen, z.B. Alkylgrignardreagenzien vom Typ **14** zu Verbindungen mit mit Sp'-X = -O-(CH₂)ₚ₁- umgesetzt werden, wobei der Parameter p1 größer gleich 3 sein kann. Dies ist in **Schema 4** am Beispiel der Umsetzung von Cyclohexan-1,2,3-triol (12) gezeigt. Die Alkoholschutzgruppen werden anschließend entfernt, wobei die Alkohle **16** erhalten werden. Die Hydroxyfunktionen können nun mit Acrylsäure(derivaten) unter Erhalt der Verbindungen **17** umgesetzt werden.

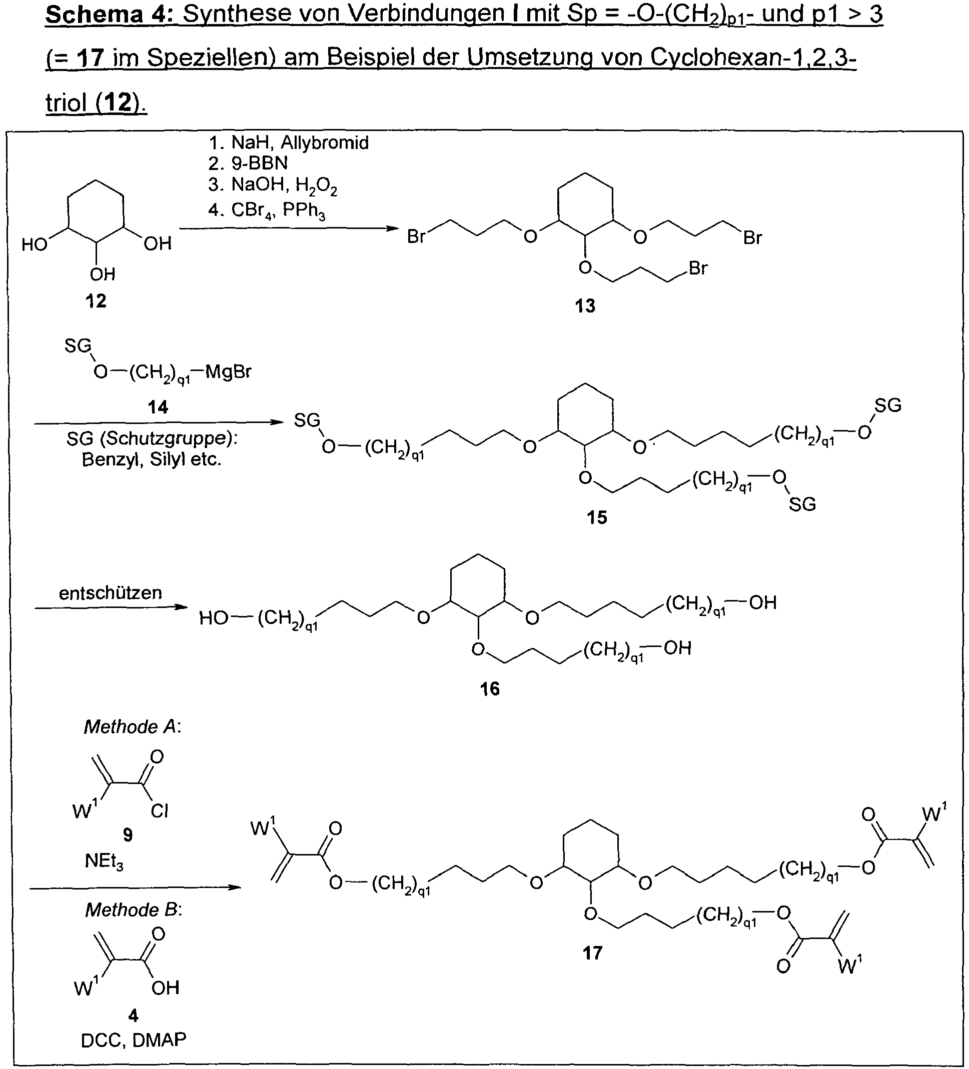

Die OH Gruppen von Verbindungen wie beispielsweise Verbindung **10** können selbstverständlich auch in andere geeignete Abgangsgruppen überführt werden. Besonders bevorzugt sind neben Bromiden auch Iodide, Tosylate, Mesylate oder Triflate (jeweils ohne Abb.).

In allen Fällen können geeignete Ausgangsmaterialien enthaltend Hydroxygruppen auch direkt mit Acrylsäuren oder Acrylsäurechloriden umgesetzt werden. Dies ist in **Schema 5** am Beispiel der Umsetzung von (3,4-Bis-hydroxymethyl-cyclohexyl)methanol (**18**) gezeigt.

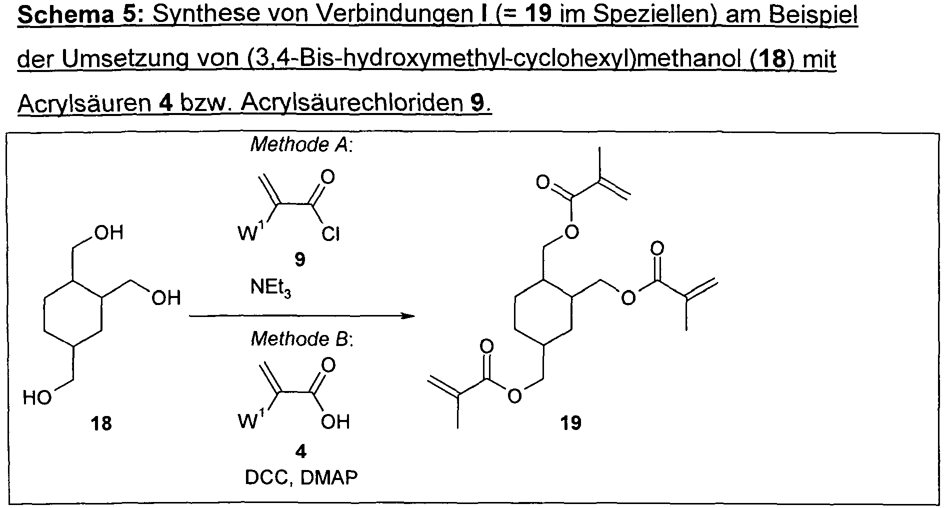

Verbindungen mit phenolischen Hydroxyfunktionen sind besonders bevorzugte Verbindungen im Sinne der vorliegenden Erfindung. Dem Fachmann ist eine Vielzahl von Reaktionen zur geeigneten Funktionalisierung bekannt. Beispielsweise kann etwa Phloroglucin (**20**) direkt mit kommerziell erhältlichem (2-Hydroxyethyl)acrylaten (Mitsunobu-Reaktion, hier nicht dargestellt) oder (2-Bromethy)acrylaten **21** umgesetzt werden. In der Reaktion mit ω-Bromalkanolen **23** werden Spacergruppen Sp = -O-(CH₂)ₚ₁- aufgebaut, und auch die Reaktion mit ω-Bromalkansäuren **2** ist eine bevorzugte Form der Funktionalisierung. Diese Möglichkeiten sind in **Schema 6** zusammengefasst.

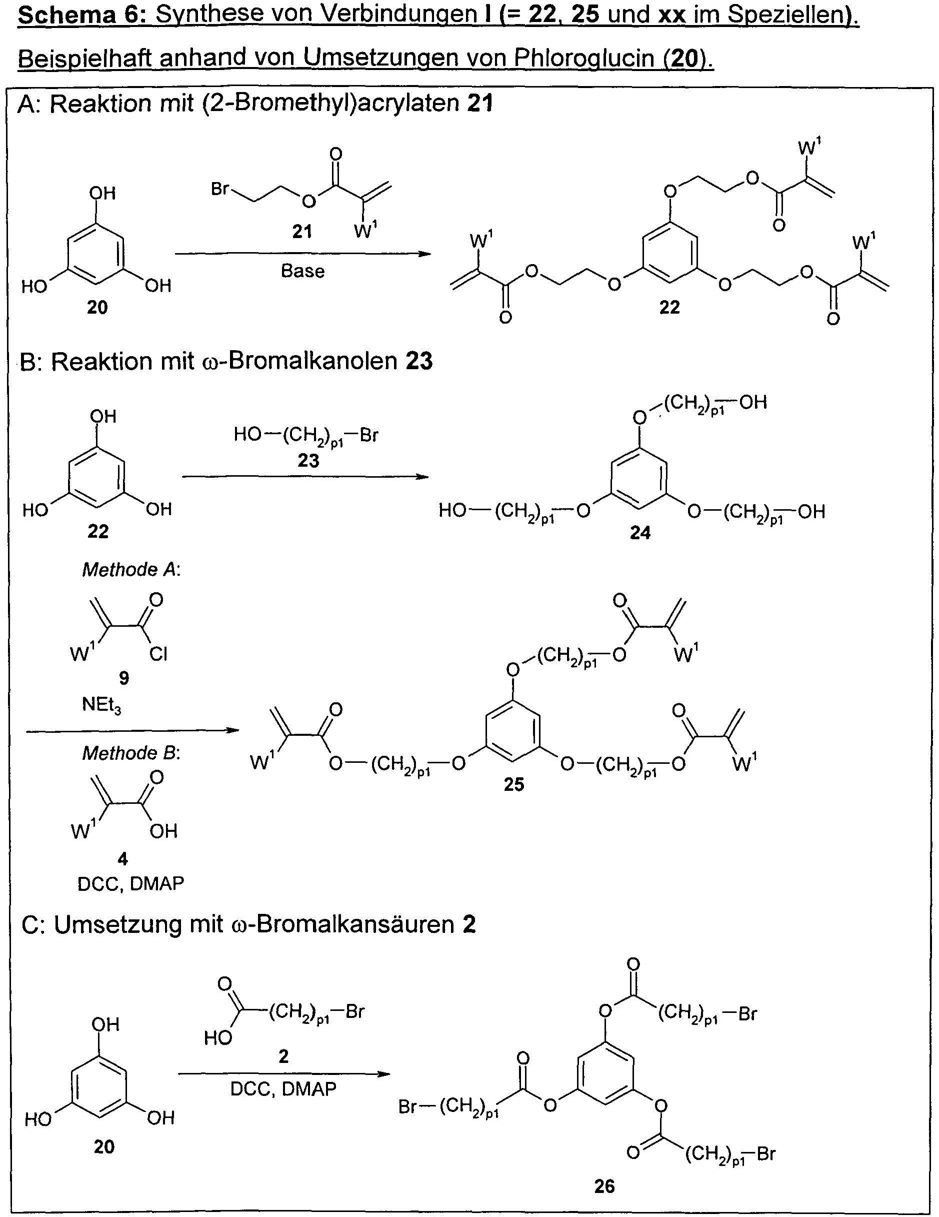

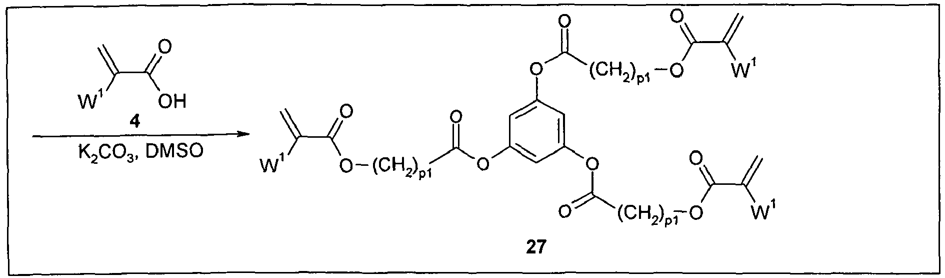

Entsprechende Edukte mit aromatischen Einheiten können bevorzugt auch direkt zu Acrylaten umgesetzt werden (vgl. **Schema 7**).

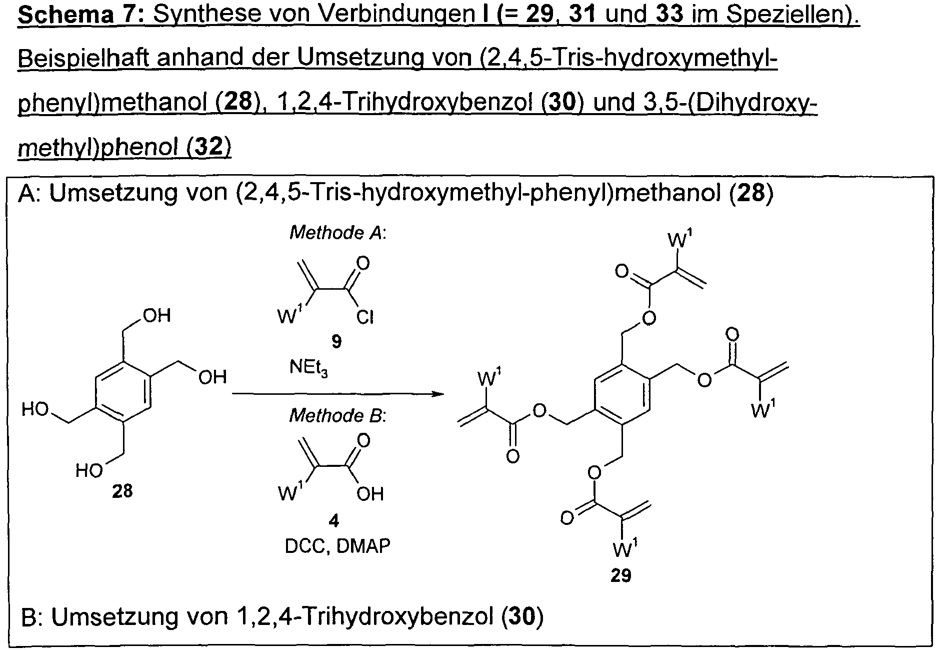

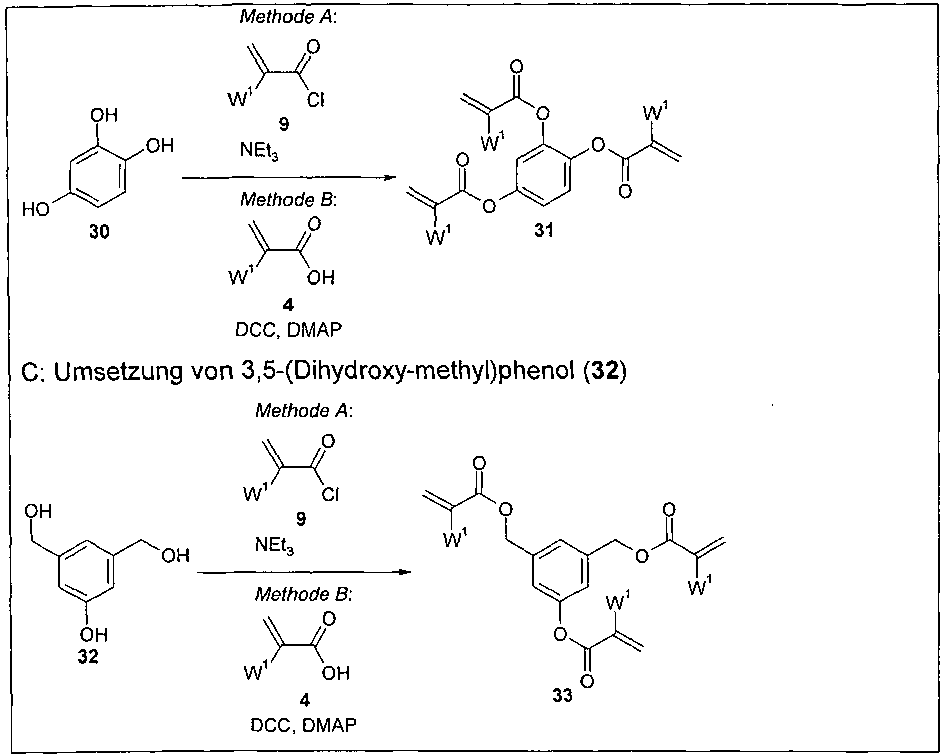

### Beispiele für den Aufbau von Spacern ausgehend von Carbonsäuren

Verbindungen mit Carbonsäurefunktionen sind besonders für die weitere Funktionalisierung geeignet. In einem bevorzugten Verfahren werden Verbindungen, enthaltend mehrere Carbonsäurefunktionen mit ω-Bromalkanolen **23** umgesetzt. Anschließend erfolgt die Umsetzung mit Acrylsäuren in Gegenwart einer Base (vgl. **Schema 8**).

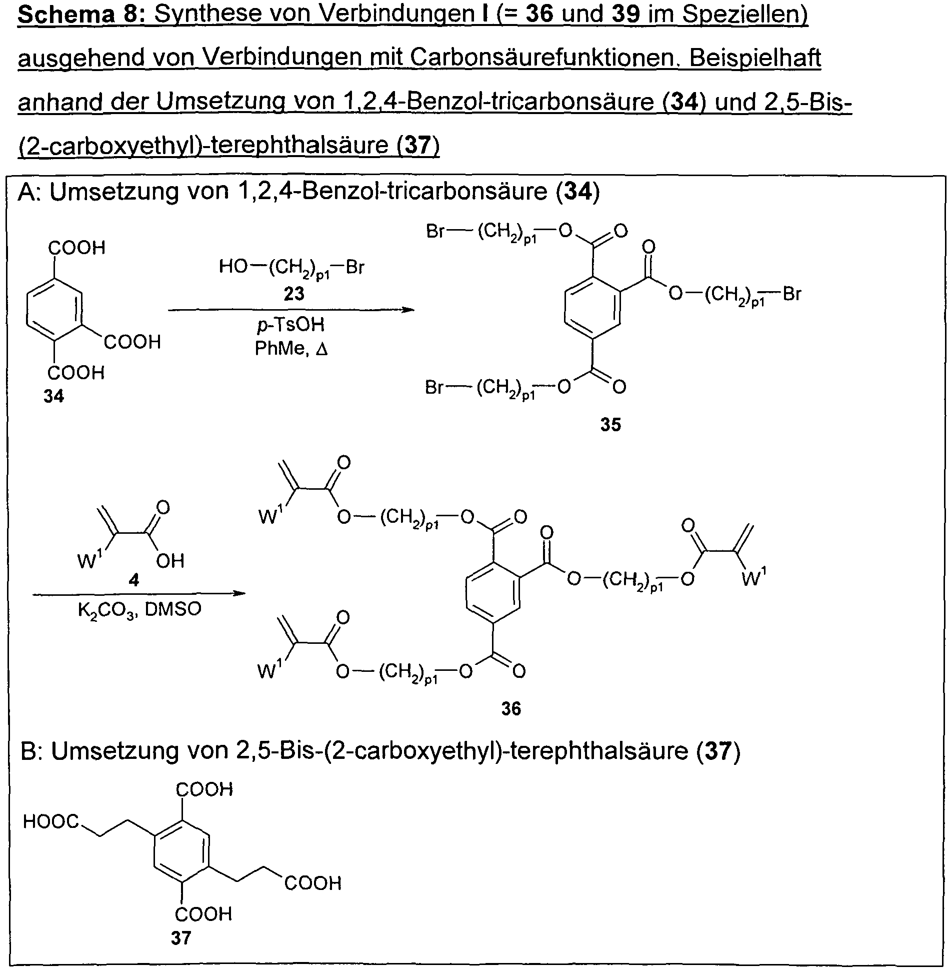

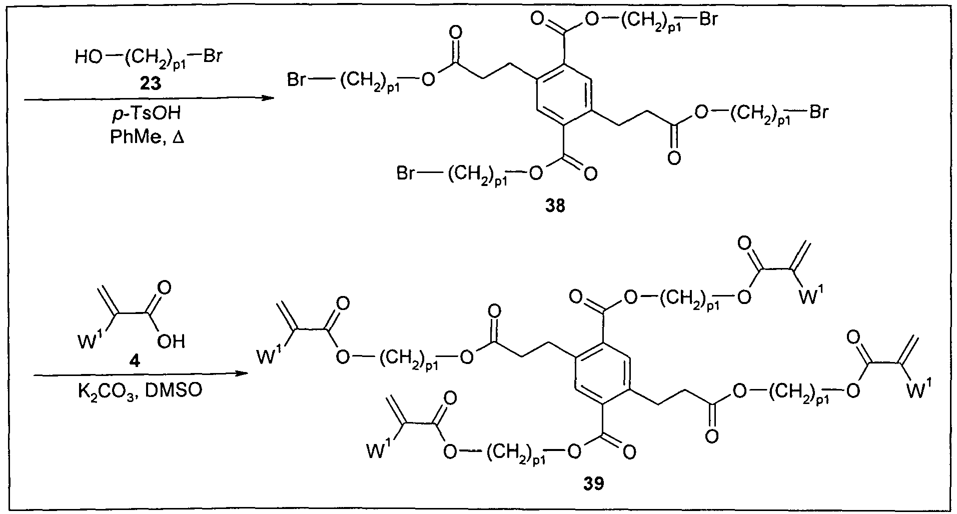

Weiterhin bevorzugt ist auch die Veresterung mit (Hydroxyalkyl)acrylaten beispielsweise (2-Hydroxyethyl)acrylaten **41.**

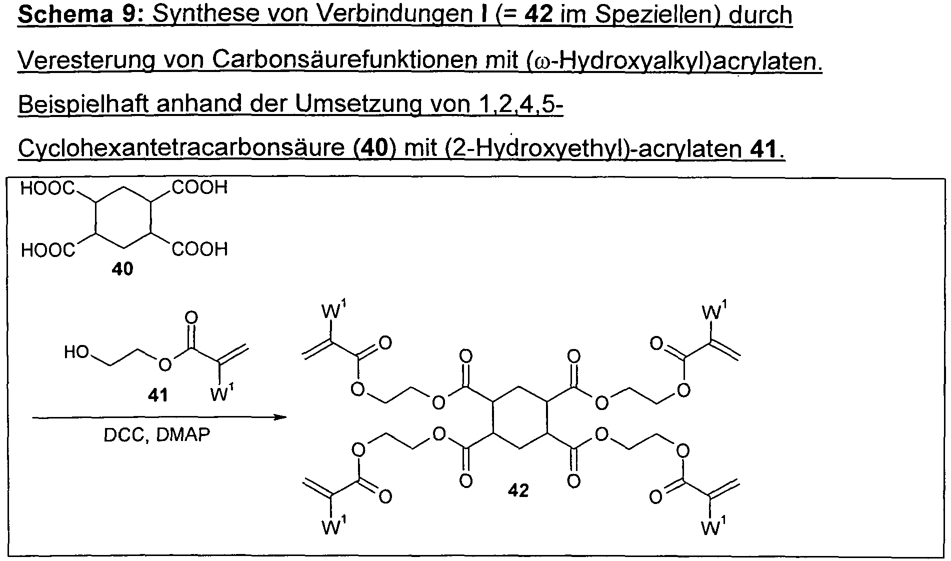

Beispiele für den Aufbau von Spacern ausgehend von Arylbromiden

Ausgehend von Arylbromiden oder allgemein Arylhalogeniden erfolgt die Synthese von bevorzugten Verbindungen der Formel I beispielsweise über eine *Sonogashira*-Kupplung mit ω-Alkinolen **44.** Dies ist in **Schema 10** beispielhaft für die Umsetzung von 1,3,5-Tribrombenzol (**43**) dargestellt. Das Kupplungsprodukt **45** kann beispielsweise hydriert werden. Dadurch werden nach Einführung der Acrylatgruppen Verbindungen **I** (**47** im Speziellen) mit Sp = (CH₂)ₚ₁ erhalten.

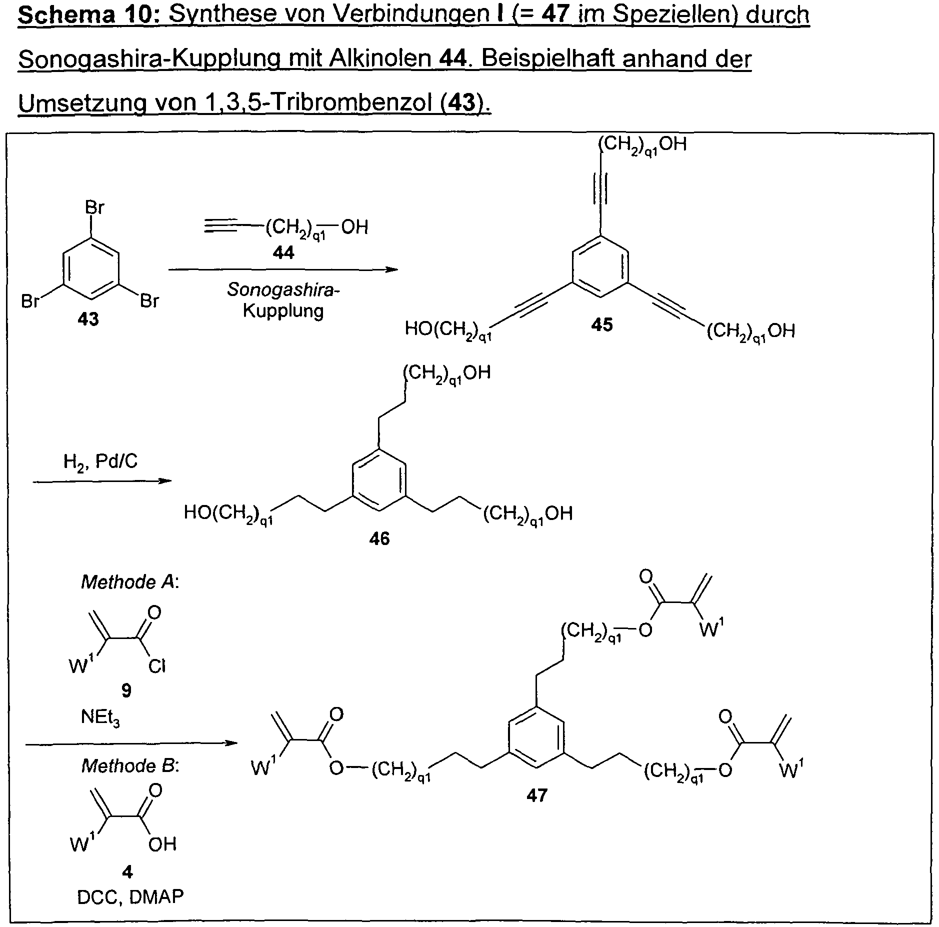

Der Fachmann kann geeignete Ausgangsmaterialien heranziehen bzw. herstellen und somit zu einer Vielzahl von Verbindungen I gelangen. Die in einem Molekül enthaltenden Spacergruppen können untereinander gleich oder aber auch voneinander verschieden sein.

Die Umsetzung von 5-Hydroxy-isophthalsäure (**48**) mit ω-Bromalkanolen **23** besipielsweise liefert die Verbindungen **49**, die mit Acrylsäuren umgesetzt werden können. Dies ist in Schema 11 dargestellt.

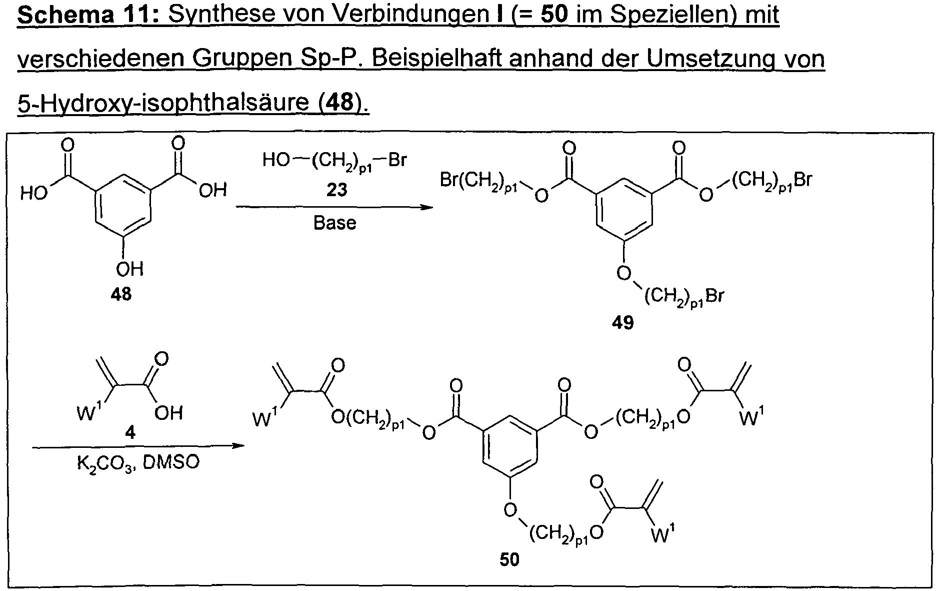

Die Transformation einzelner funktioneller Gruppen kann auch schrittweise erfolgen. 4-Bromresorcinol (**51**) kann in einer Sonogashira-Reaktion mit ω-Alkinolen **44** zu den Verbindungen **52** umgesetzt werden. Diese Verbindungen werden anschließend hydriert. Aus den Produkten **53** werden dann in der Reaktion mit Acrylsäuren oder Acrylsäurechloriden beispielsweise die Verbindungen **54** erhalten.

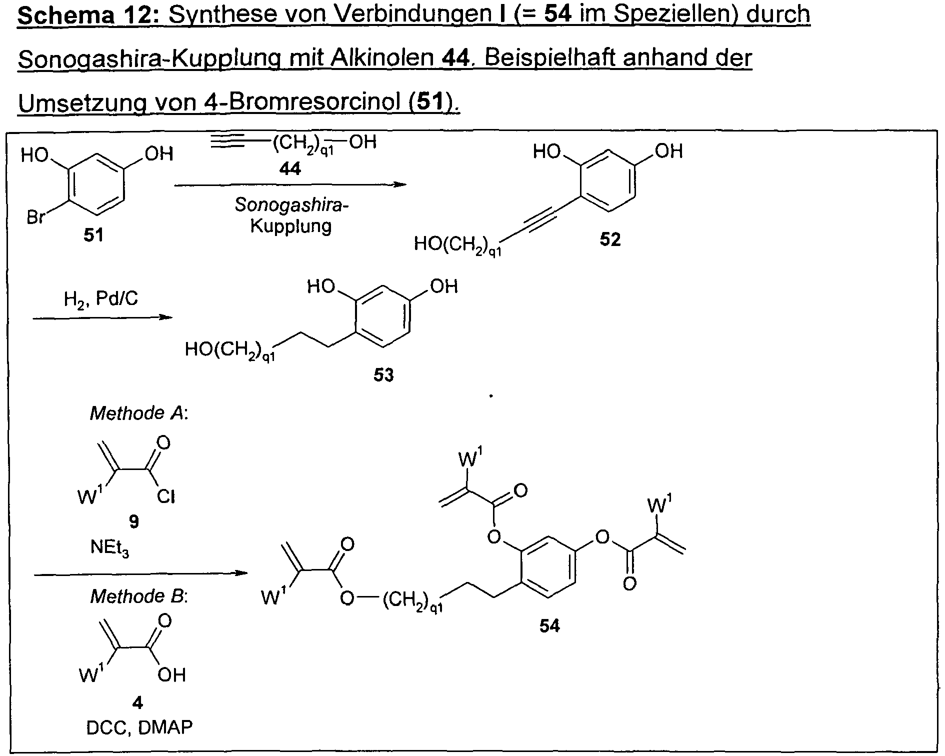

Auch hier kann der Fachmann geeignete Ausgangsmaterialien und Reaktionsfolgen geeignet kombinieren.

Ein weiterer Gegenstand der Erfindung ist somit im allgemeinen ein Verfahren zur Herstellung von Verbindungen der Formel I wie für die Verbindungen definiert durch Derivatisieren von Polyolen und Polycarbonsäuren von einfachen Carbocyclen mit einem Ringsystem gemäß der Gruppe A¹ nach Formel I.

Es folgen beispielhafte Ausführungsformen bevorzugter Verbindungen. In den Formeln und Teilformeln nimmt p₁ einen Wert zwischen 0 und 12 an, bevorzugt einen Wert zwischen 0 und 8, besonders bevorzugt einen Wert zwischen 2 und 6, wobei p₁ nicht den Wert 0 annimmt wenn (CH₂)ₚ₁ zwischen zwei Gruppen ausgewählt aus O der (CO) steht. Die Variable p₁ kann innerhalb eines Moleküls gleich sein oder verschiedene Werte annehmen. Bevorzugt sind alle p₁ gleich groß. 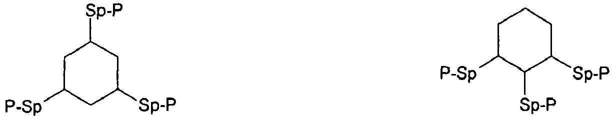 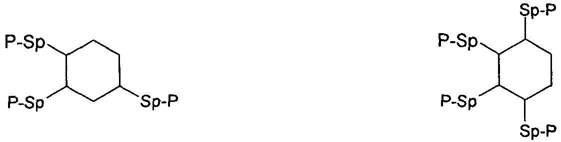 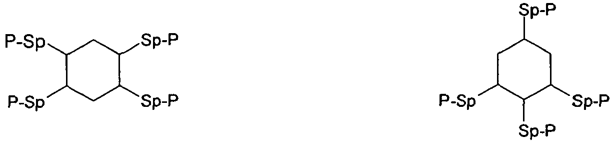 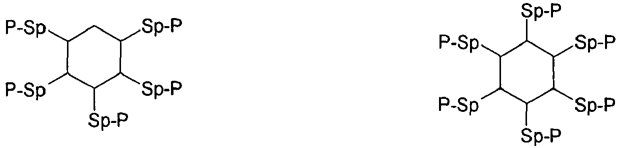 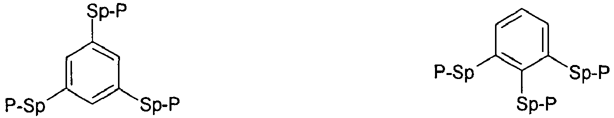 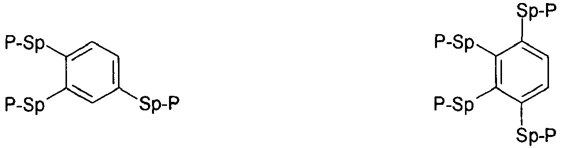 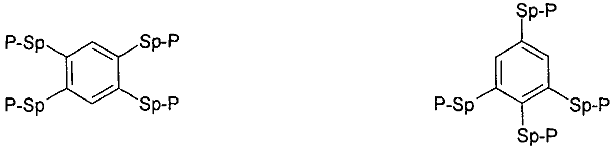 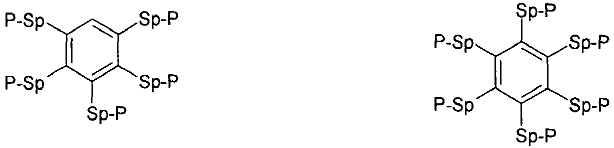 worin Sp und P wie oben definiert sind. Die Substituenten (-Sp-P) an diesen Beispielverbindungen bedeuten bevorzugt eine Gruppe wie nachfolgend beschrieben.

Die polymerisierbare Gruppen P zusammen mit dem Spacer Sp, also -Sp-P, bedeutet allgemein und insbesondere in den vorangehenden Strukturen bevorzugt: 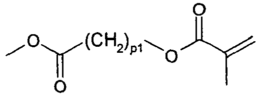 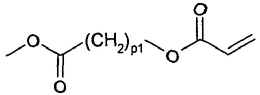 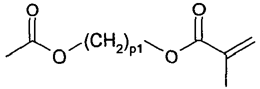 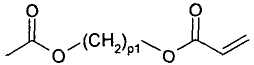 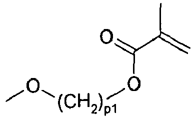 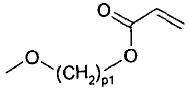 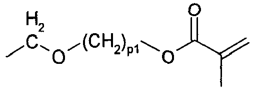 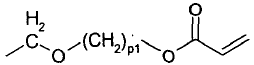 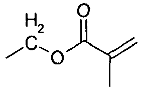 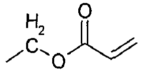 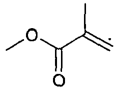 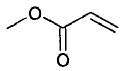 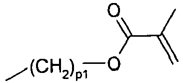 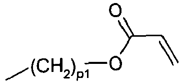 oder Kombinationen davon, wie in den folgenden Verbindungen:

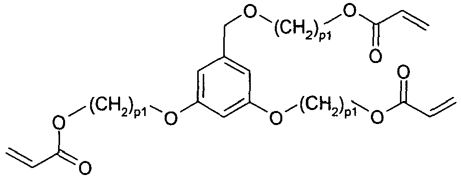

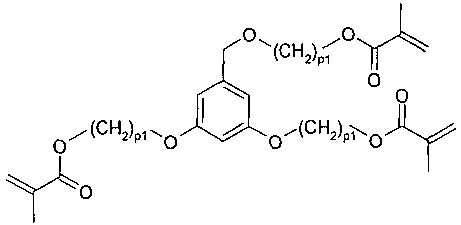

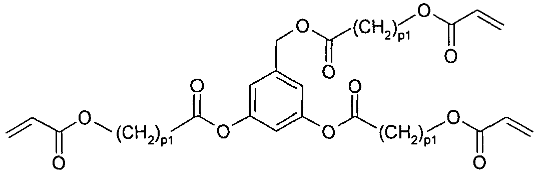

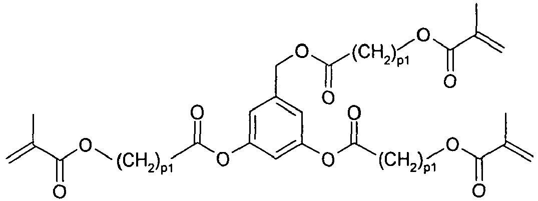

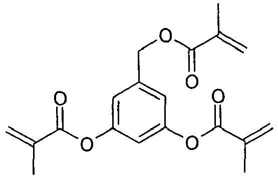

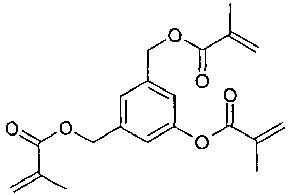

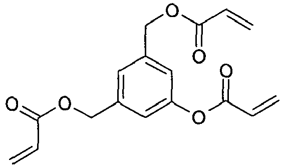

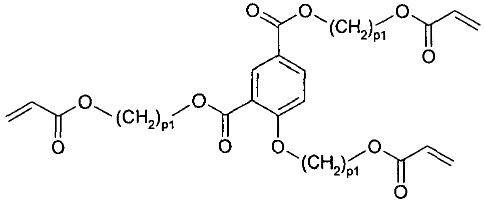

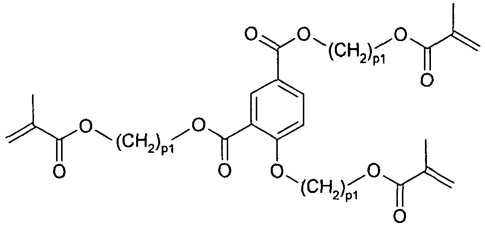

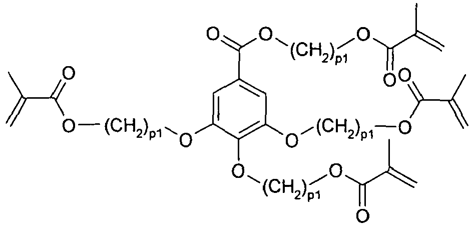

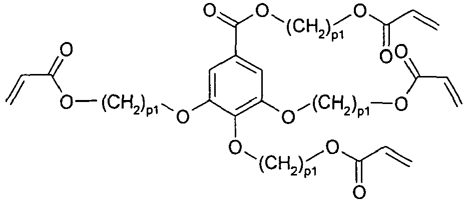

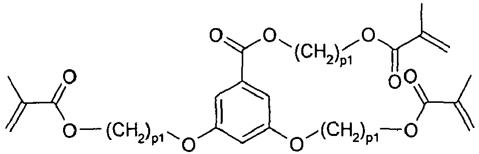

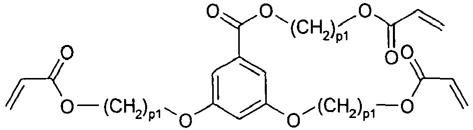

Ein Gegenstand der Erfindung ist die Verwendung der Verbindungen der Formel I in FK-Medien, insbesondere die Verwendung als Polymer in solchen Medien. Die Verbindungen werden auch zur Herstellung eines Polymers zur Stabilisierung von flüssigkristallinen Phasen, insbesondere von blauen Phasen verwendet.

Die Verwendung von Polymeren zur Stabilisierung von flüssigkristallinen Phasen ist grundsätzlich bekannt und für den Fall der blauen Phasen in der zitierten Literatur und im Beispielteil beschrieben. In der Regel wird das Medium bei einer Temperatur polymerisiert, bei der es in der blauen Phase vorliegt. Dadurch verbreitert sich der Stabilitätsbereich dieser Phase erheblich.

Bevorzugte FK-Medien sind dadurch gekennzeichnet, dass sie nach Stabilisierung der blauen Phase durch Polymerisation mindestens im Bereich von 15 bis 30 °C, bevorzugt von 10 bis 40 °C, besonders bevorzugt von 0 bis 50 °C, uns ganz besonders bevorzugt von -10 bis 60 °C eine blaue Phase aufweisen.

Ebenfalls Gegenstand der vorliegenden Erfindung sind, wie eingangs erwähnt, flüssigkristalline Medien, welche ein Polymer, das mindestens eine polymerisierte Monomer-Komponente der Formel I und gegebenenfalls weitere polymerisierte Monomere umfasst, enthalten, oder welche mindestens ein nicht-polymerisiertes Monomer der Formel I enthalten, oder beides.

Das FK-Medium enthält vorzugsweise eine flüssigkristalline Komponente, im Folgenden auch als "FK-Hostmischung" bezeichnet, enthaltend eine oder mehrere, vorzugsweise zwei oder mehr niedermolekulare (d.h. monomere und unpolymerisierbare) Verbindungen wie vor- und nachstehend beschrieben, welche vorzugsweise mesogen oder flüssigkristallin sind.

Besonders bevorzugte erfindungsgemäße Medien werden im Folgenden genannt:
Das Medium ist bei mindestens einer Temperatur vor oder nach der Polymerisation in einer blauen Phase und/oder einer nematischen Phase.

Die nachfolgenden Konzentrationsangaben beziehen sich auf die Verwendung von Verbindungen der Formel I als Stabilisierung der blauen Phase. Das Medium enthält ein oder mehrere monoreaktive Monomere oder ein Polymer, das aus einem oder mehreren monoreaktiven Monomeren und optional weiteren Monomeren aufgebaut ist. Der Anteil an monoreaktiven Monomeren beträgt vorzugsweise 1 bis 15 Gew.-%, besonders bevorzugt 2 bis 12 Gew.-%. Solche einfach reaktiven Verbindungen, beispielsweise mit einer (Meth-)Acrylatgruppe, sind dem Fachmann hinlänglich bekannt.

Das Medium enthält neben den vorangenannten monoreaktiven Monomeren ein oder mehrere als Quervernetzer wirkende Verbindungen, die sich durch mehrere reaktive Gruppen auszeichnen. Zu diesen gehören die Verbindungen der Formel I.

Das Medium enthält ein oder mehrere zweifach reaktive Monomere oder ein Polymer, das aus einem oder mehreren zweifach reaktiven Monomeren und optional weiteren Monomeren aufgebaut ist. Der Anteil an zweifach reaktiven Monomeren beträgt vorzugsweise 0 bis 9 Gew.-%, besonders bevorzugt 0 bis 5 Gew.-%. In einer bevorzugten Ausführung werden die zweifach reaktiven Monomere ganz oder teilweise durch die erfindungsgemäßen Verbindungen der Formel I mit 3 oder mehr reaktiven Gruppen ersetzt. Die Summe aus mono- und zweifach reaktiven Monomeren beträgt vorzugsweise 3 bis 17 Gew.-%, besonders bevorzugt 6-14 Gew.-%.

Es können auch dreifach oder mehrfach (>3) reaktive Monomere eingesetzt werden. Die dreifach oder mehrfach (>3) reaktiven Monomere gehören vorzugsweise teilweise oder ganz den Verbindungen der Formel I an.

Das Verhältnis von monoreaktiven Monomeren zu Quervernetzern beträgt vorzugsweise zwischen 3:1 und 1:1. Das Verhältnis ist abhängig von der Zahl der reaktiven Gruppen der beteiligten Quervernetzer. Es liegt bei der Verwendung von vierfach reaktiven Quervernetzern besonders bevorzugt zwischen 3:1 und 2:1, bei der Verwendung von zweifach reaktiven Quervernetzern besonders bevorzugt zwischen 1,5:1 und 1:1.

Für die PSA-Technik werden geringere Mengen an polymerisierbaren Verbindungen eingesetzt. Die erfindungsgemäßen FK-Medien zur Verwendung in PSA-Anzeigen enthalten vorzugsweise < 5 Gew.-%, besonders bevorzugt < 1 Gew.-% und ganz besonders bevorzugt < 0.5 Gew.-% an polymerisierbaren Verbindungen, insbesondere polymerisierbaren Verbindungen der Formel I optional in Kombination mit einer mono- oder direaktiven Komponente. Um einen ausreichenden Effekt zu erreichen werden bevorzugt 0,2 Gew.-% oder mehr eingesetzt. Die optimale Menge ist abhängig von der Schichtdicke.

Monoreaktive Monomere haben beispielsweise eine Struktur der Formel

R^{a}-Sp-P

worin
P eine polymerisierbare Gruppe,
Sp eine Abstandsgruppe oder eine Einfachbindung, und
R^{a} einen organischen Rest mit mindestens 3 C-Atomen bedeutet.
Der Rest R^{a} kann ein sogenannter mesogener Rest sein, der in der Regel einen oder mehrere Ringe beinhaltet, oder ein einfacher, in der Regel kettenförmiger, nicht-mesogener Rest.

Nicht-mesogene Reste sind bevorzugt geradkettiges oder verzweigtes Alkyl mit 1 bis 30 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O-so ersetzt sein können, dass O- und/oder S-Atome nicht direkt miteinander verknüpft sind, und worin auch ein oder mehrere H-Atome durch F, Cl, Br,
I oder CN ersetzt sein können.

Bevorzugte Bedeutungen von P und Sp entsprechen den unten für Formel I* angegebenen Bedeutungen.

R*^{a}* ist besonders bevorzugt ein Rest der Formel 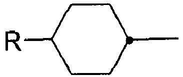 oder 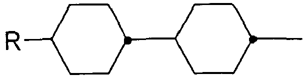 worin
- R: jeweils unabhängig voneinander einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind, bedeutet.

Bevorzugte mesogene Monomere mit einer, zwei oder mehreren polymerisierbaren Gruppen sind z. B. ausgewählt aus der Tabelle D:

**Tabelle D**

| In der Tabelle D sind Beispielverbindungen zusammengestellt, die in den FK-Medien gemäß der vorliegenden Erfindung vorzugsweise als reaktive mesogene Verbindungen verwendet werden können. | |
|---|---|
| 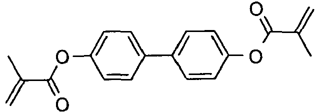 | 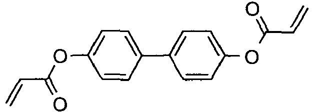 |
| 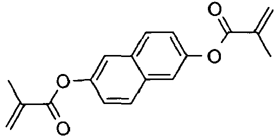 | 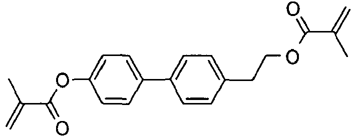 |
| 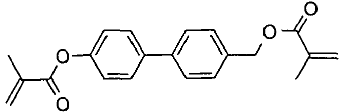 | 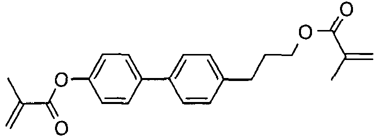 |
| 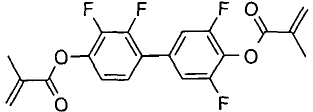 | 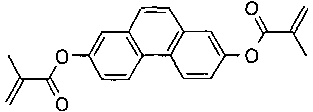 |
| 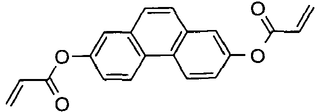 | 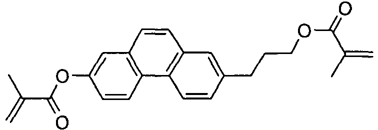 |
| 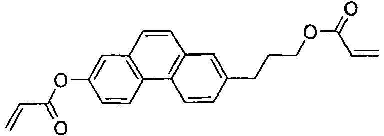 | 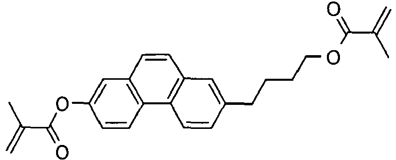 |
| 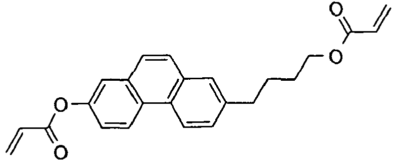 | |
| 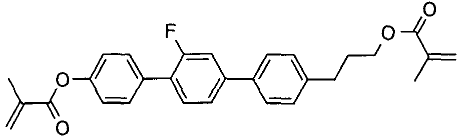 | |
| 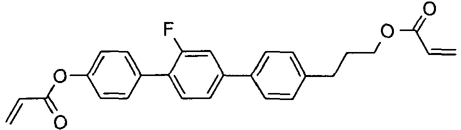 | |
| 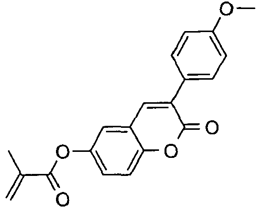 | 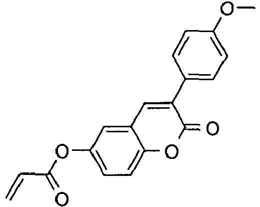 |
| 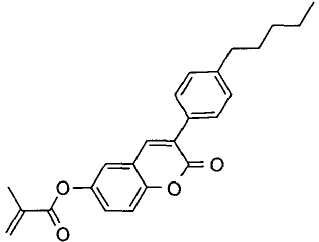 | 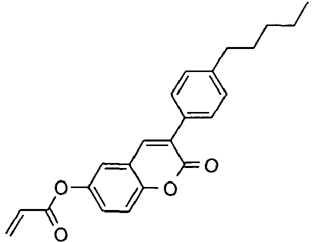 |
| 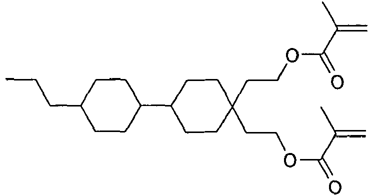 | 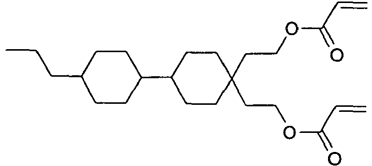 |
| 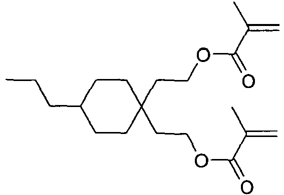 | |
| 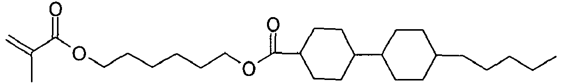 | |
| 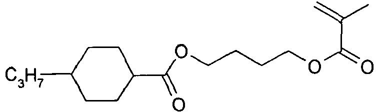 | |
| 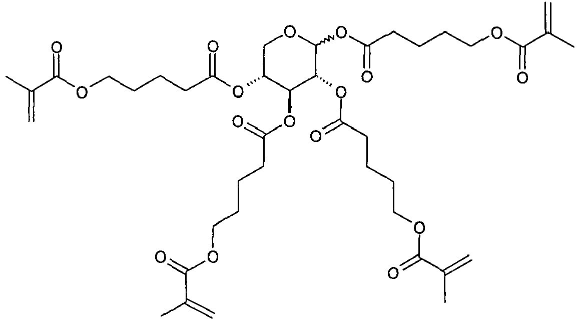 | |
| 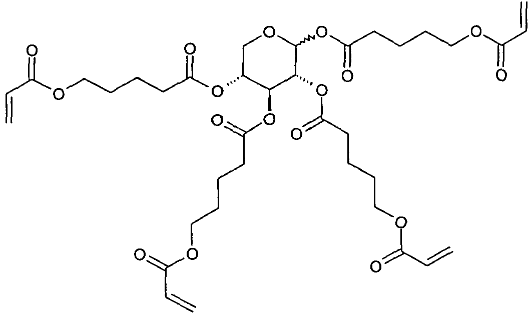 | |
| 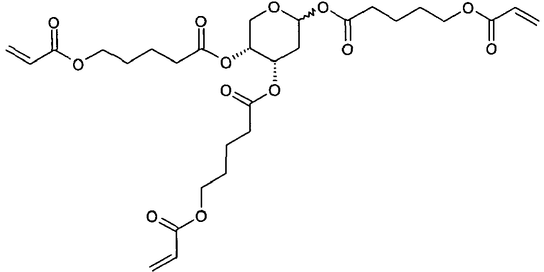 | |
| 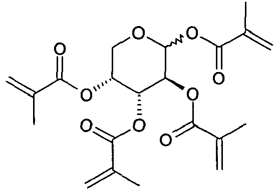 | |

In einer bevorzugten Ausführungsform der vorliegenden Erfindung enthalten die mesogenen Medien eine oder mehrere Verbindungen ausgewählt aus der Gruppe der Verbindungen der Tabelle D.

In einer weiteren bevorzugten Ausführungsform der Erfindung bedeutet in der Formel I P-Sp- einen Rest mit zwei oder mehreren polymerisierbaren Gruppen (multifunktionelle polymerisierbare Reste). Geeignete Reste dieses Typs, sowie diese enthaltende polymerisierbare Verbindungen und ihre Herstellung sind beispielsweise in US 7,060,200 B1 oder US 2006/0172090 A1 beschrieben. Besonders bevorzugt sind multifunktionelle polymerisierbare Reste ausgewählt aus folgenden Formeln

-X-alkyl-CHP¹-CH₂-CH₂P² I*a

-X-alkyl-C(CH₂P¹)(CH₂P²)-CH₂P³ I*b

-X-alkyl-CHP¹CHP²-CH₂P³ I*c

-X-alkyl-C(CH₂P¹)(CH₂P²)-CₐₐH₂ₐₐ₊₁ I*d

-X-alkyl-CHP¹-CH₂P² I*e

-X-alkyl-CHP¹P² I*f

-X-alkyl-CP¹P²-CₐₐH₂ₐₐ₊₁ I*g

-X-alkyl-C(CH₂P¹)(CH₂P²)-CH₂OCH₂-C(CH₂P³)(CH₂P⁴)CH₂P⁵ I*h

-X-alkyl-CH((CH₂)ₐₐP¹)((CH₂)_{bb}P²) I*i

-X-alkyl-CHP¹CHP²-CₐₐH₂ₐₐ₊₁ I*k

-X-alkyl-C(CH₃)(CH₂P¹)(CH₂P²) I*m

-X-CH(alkyl-P)-alkyl-P I*n

worin
- X: wie für Formel I definiert ist,
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl oder CN ersetzt sein können, wobei R⁰⁰ und R⁰⁰⁰ die oben angegebene Bedeutung haben,
aa und bb jeweils unabhängig voneinander 0, 1, 2, 3, 4, 5 oder 6 bedeuten, und
- P¹⁻⁵: jeweils unabhängig voneinander eine der für P angegebenen Bedeutungen besitzen.

Die polymerisierbaren Verbindungen und RMs können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden. Weitere Syntheseverfahren finden sich in den vor- und nachstehend zitierten Dokumenten. Im einfachsten Fall erfolgt die Synthese solcher RMs zum Beispiel durch Veresterung oder Veretherung von 2,6-Dihydroxynaphthalin oder 4,4'-Dihydroxybiphenyl mit entsprechenden Säuren, Säurederivaten, oder halogenierten Verbindungen enthaltend eine Gruppe P, wie zum Beispiel (Meth)acrylsäurechlorid oder (Meth)acrylsäure, in Gegenwart von einem wasserentziehenden Reagens wie zum Beispiel DCC (Dicyclohexylcarbodiimid).

Als weitere Komponente ernhalten die flüssigkristinen Medien bevorzugt die flüssigkristalline Phase unterstützende, nicht-polymerisierbare Verbindungen, die auch als Host-Mischung bezeichnet wird. Dieser Anteil beträgt typischerweise 50 bis 95 Gew.-%, bevorzugt 80 bis 90 Gew.-%. Im Fall von polymerstabilisierten blauen Phasen umfasst der nicht-polymerisierbare Anteil bevorzugt Verbindungen ausgewählt aus Tabelle A (siehe Beispielteil). Bevorzugt besteht der Anteil zu 50 Gew.-% oder mehr aus diesen Verbindungen, ganz besonders bevorzugt zu 80 Gew.-% oder mehr.

Die erfindungsgemäßen flüssigkristallinen Medien mit blauer Phase besitzen vorzugsweise eine positive dielektrische Anisotropie. Sie lassen sich so konzipieren, dass sie eine sehr hohe dielektrische Anisotropie kombiniert mit hohen optischen Anisotropien besitzen.

Bevorzugt enthalten die flüssigkristallinen Medien eine oder mehrere weitere Verbindungen ausgewählt aus den Formel II und III: 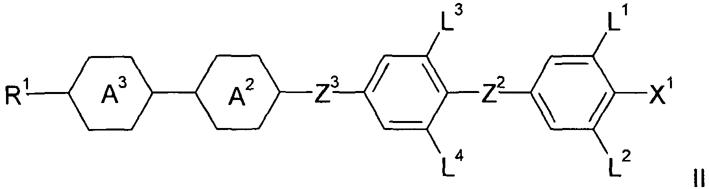 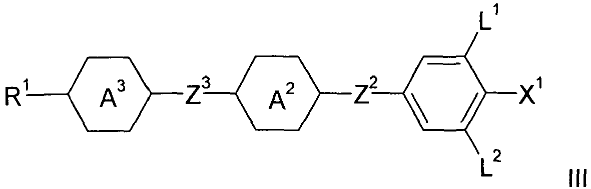 worin
- R¹: jeweils unabhängig voneinander einen unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -CF=CF-, -CF=CH-, -CH=CF-, -(CO)O-, -O(CO)-, -(CO)- oder -O- so ersetzt sein können, dass O-Atome nicht direkt miteinander verknüpft sind, bevorzugt einen geradkettigen Alkylrest mit 2 bis 7 C-Atomen,
- A², A³: unabhängig voneinander 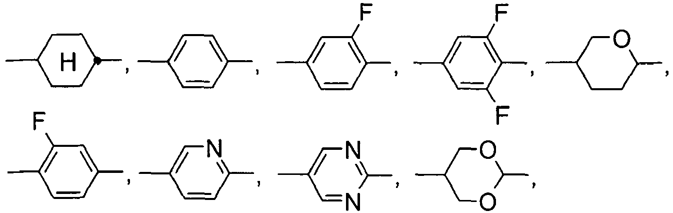
- Z², Z³: unabhängig voneinander eine Einfachbindung, CF₂O, CH₂CH₂, CF₂CH₂, CF₂CF₂, CFHCFH, CFHCH₂, (CO)O, CH₂O, C=C, CH=CH, CF=CH, CF=CF; wobei unsymmetrische Bindeglieder (z.B. CF₂O) in beide möglichen Richtungen orientiert sein können,
- X¹: F, Cl, CN, oder Alkyl, Alkenyl, Alkenyloxy, Alkylalkoxy oder Alkoxy mit 1 bis 3 C-Atomen, welches durch F ein- oder mehrfach substituiert ist, und
- L¹ bis L⁴: H oder F,
bedeuten.

Bevorzugt enthalten die flüssigkristallinen Medien zwischen 20 und 95 Gew.-% an Verbindungen der Formel II. Die Verbindungen der Formel III werden bevorzugt, sofern vorhanden, mit bis zu 40 Gew.-% eingesetzt. Die restlichen sonstigen Verbindungen, sofern vorhanden, sind ausgewählt aus weiteren Verbindungen mit hoher dielektrischer Anisotropie, hoher optischer Anisotropie und vorzugsweise mit hohem Klärpunkt.

Bevorzugte Verbindungen der Formel II sind solche der Formel IIa: 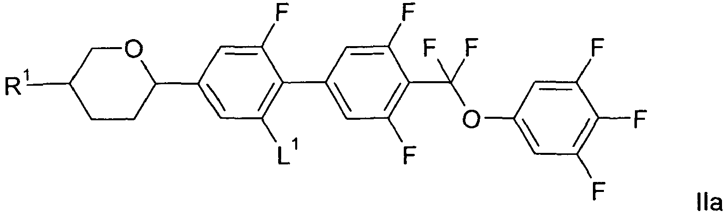 worin R¹ und L¹ wie für Formel II definiert sind.

Bevorzugte Verbindungen der Formel III sind solche der Formel IIIa oder IIIb: 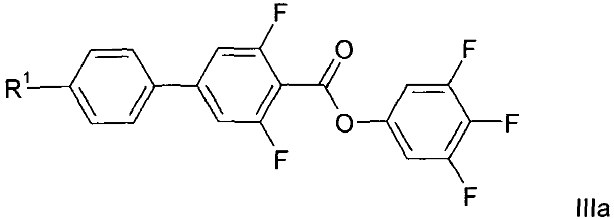 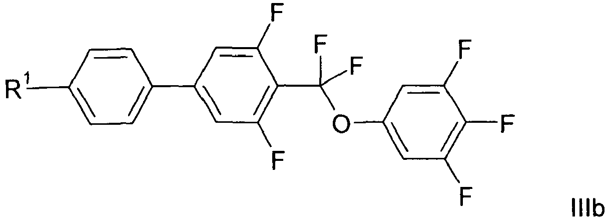 worin R¹ wie für Formel III definiert ist.

Die flüssigkristallinen Medien können darüber hinaus weitere Zusätze wie Stabilisatoren, chirale Dotierstoffe und Nanopartikel enthalten. Die einzelnen, zugesetzten Verbindungen werden in Konzentrationen von vorzugsweise von 0,1 bis 6 % eingesetzt. Die Konzentrationen der einzelnen verwendeten Verbindungen liegen vorzugsweise jeweils im Bereich von 0,1 % bis 3 %. Dabei werden jedoch die Konzentrationsangaben der übrigen Bestandteile der Flüssigkristallmischungen, also der flüssigkristallinen oder mesogenen Verbindungen und gegebenenfalls der Polymerisationskomponenten, ohne Berücksichtigung der Konzentration dieser Zusatzstoffe angegeben.

Vorzugsweise enthalten die flüssigkristallinen Medien 0,01 bis 10 Gew.-% eines optisch aktiven, chiralen Dotierstoffs. Dieser unterstützt die Bildung einer flüssigkristallinen blauen Phase. Für blaue Phasen werden bevorzugt chirale Dopants mit hoher HTP ('helical twisting power') eingesetzt, typischerweise im Bereich von 2-5 Gew.-%.

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Im Rahmen der vorliegenden Erfindung sind die Begriffe Alkyl, Alkenyl, etc. wie folgt definiert:
Der Ausdruck "Alkyl" umfasst geradkettige und verzweigte Alkylgruppen mit 1-9 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfasst geradkettige und verzweigte Alkenylgruppen mit bis zu 9 Kohlenstoffatomen, insbesondere die geradkettigen Gruppen. Besonders bevorzugte Alkenylgruppen sind C₂₋C₇-1 E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "halogenierter Alkylrest" umfasst vorzugsweise ein- oder mehrfach fluorierte und/oder chlorierte Reste. Perhalogenierte Reste sind eingeschlossen. Besonders bevorzugt sind fluorierte Alkylreste, insbesondere CF₃, CH₂CF₃, CH₂CHF₂, CHF₂, CH₂F, CHFCF₃ und CF₂CHFCF₃.

Der Ausdruck "Alkylen" umfasst geradkettige und verzweigte Alkandiylgruppen mit 1-12 Kohlenstoffatomen, insbesondere die geradkettigen Gruppen Methylen, Ethylen, Propylen, Butylen und Pentylen. Gruppen mit 2-8 Kohlenstoffatomen sind im Allgemeinen bevorzugt.

Weitere Kombinationen der Ausführungsformen und Varianten der Erfindung gemäß der Beschreibung ergeben sich auch aus den Ansprüchen.

### Beispiele

### Substanzbeispiele

### Beispiel 1: Cyclohexan-1,3,5-tricarbonsäure-tris-[2-(2-methyl-acryloyloxy)-ethyl]ester

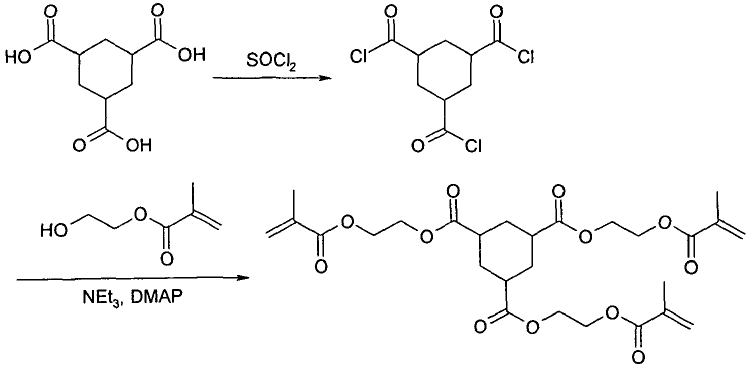

5,0 g (23,2 mmol) Cyclohexan-1,3,5-tricarbonsäure werden zusammen mit 7,6 ml (0,1 mol) Thionylchlorid und 0,1 ml DMF 3 h auf 90 °C erhitzt. Das Gemisch wird mit Toluol aufgenommen, und im Vakuum vollständig konzentriert. Das so erhaltene Cyclohexan-1,3,5-tricarbonsäurechlorid wird direkt weiter verwendet.

15,8 g (0,12 mol) (2-Hydroxyethyl)methacrylat werden zusammen mit 50 ml (0,36 mol) Triethylamin und 123 mg (1,0 mmol) DMAP in 50 ml Dichlormethan vorgelegt. 5,5 g (20,3 mol) rohes Cyclohexan-1,3,5-tricarbonsäurechlorid werden gelöst in 100 ml Dichlormethan unter Eiskühlung langsam zugegeben. Nach beendeter Zugabe wird die Mischung 20 h bei Raumtemperatur gerührt. Der Ansatz wird filtriert und mit Wasser gewaschen. Die Lösung wird mit Natriumsulfat getrocknet und vollständig konzentriert. Das Rohprodukt wird säulenchromatographisch (SiO₂, CH₂Cl₂ : MTBE = 95 : 5 → 90 : 10) gereinigt.
Cyclohexan-1,3,5-tricarbonsäure-tris-[2-(2-methyl-acryloyloxy)-ethyl]ester wird in exzellenter Reinheit (> 99%) als farbloses Öl erhalten.

### Phasensequenz: Tg -46 I

**¹H-NMR** (400 MHz, CHCl₃): δ = 6,12-6,11 (m, 3H, *H_{Acrylat}*), 5,61-5,58 (m, 3H, H*Acrylat*), 4,35 (s, 12H, -OCH₂CH₂-OC(O)), 2,48-2,39 (m, 3H, *H*_{*aliphat*.}), 2,31-2,24 (m, 3H, H_{*aliphat*.}), 1,95-1,94 (m, 9H, Me_{*Acrylat*.}), 1,55 (q, 3H, J = 12,7 Hz, *H_{aliphat.}*).
**MS (EI):** m/z(%) = 552(3, M⁺), 113 (100).

### Beispiel 2: Cyclohexan-1,2,4-tricarbonsäure-tris-[2-(2-methyl-acryloyloxy)-ethyl]ester

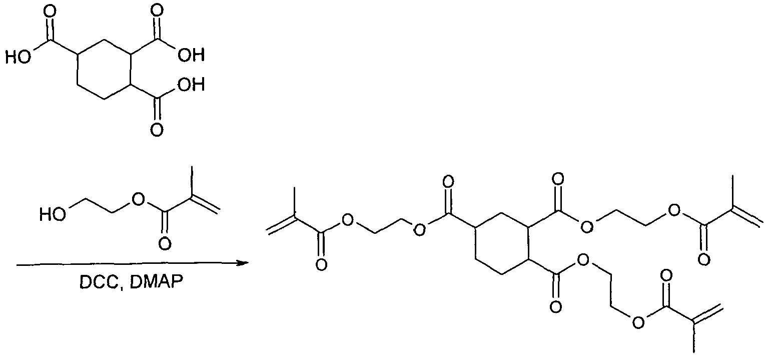

283 mg (2,3 mmol) DMAP werden in 230 ml THF vorgelegt und mit 1,2 ml (1,2 mmol) Chlorwasserstofflösung (1 M Lsg. in Et₂O) versetzt. 10,0 g (46,3 mmol) Cyclohexan-1,3,5-tricarbonsäure und 25,3 ml (0,21 mol) (2-Hydroxyethyl)methacrylat werden zugegeben, und die Mischung wird mit 210 ml (0,21 mol) DCC (1 M Lsg. in CH₂Cl₂) versetzt. Die Mischung wird 22 h gerührt, und 17,5 g (0,14 mol) Oxalsäure-Dihydrat werden portionsweise zugegeben. Der Ansatz wird filtriert, und das Filtrat wird vollständig konzentriert. Das Rohprodukt wird chromatographisch (SiO₂, Pentan : Ethylacetat = 4 : 1) gereinigt. Cyclohexan-1,3,5-tricarbonsäure-tris-[2-(2-methyl-acryloyloxy)ethyl]-ester wird als farbloses Öl erhalten.

### Phasensequenz: Tg -42

**¹H-NMR** (400 MHz, CHCl₃): δ = 6,13-6,11 (m, 3H, H*_{Acrylat}*), 5,61-5,58 (m, 3H, H*_{Acrylat}*), 4,41-4,23 (m, 12H, -OCH₂CH₂-OC(O)), 3,30-3,26 (m 1H, H_{*aliphat*.}), 2,56-2,48 (m, 1H, *Hₐₗᵢₚₕₐₜ*.), 2,41-2,30 (m, 3H, *H*_{*aliphat*.}), 2,11-1,77 (m, 11H, *H*_{*aliphat*.}), 1,67-1,56 (m, 1H, *Hₐₗᵢₚₕₐₜ*.), 1,47-1,35 (m, 1H, *H*_{*aliphat*.}).
**MS (EI):** m/z(%) = 552(3, M⁺), 113 (100).

### Beispiel 3: Benzol-1,3,5-tricarbonsäuretris-[2-(2-methyl-acryloyloxy)-ethyl]ester

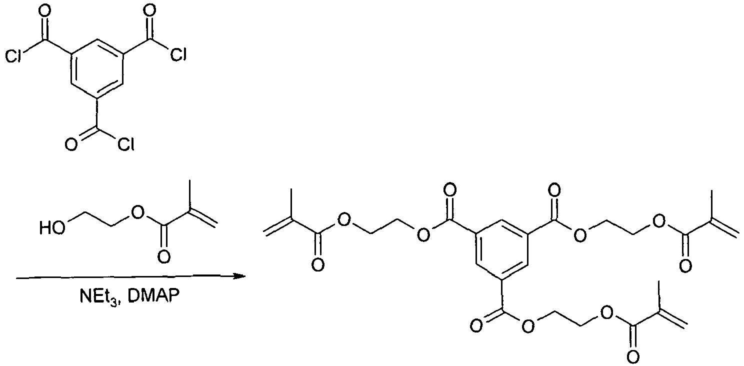

Die Reinigung erfolgt Umkristallisation aus Isopropanol. Benzol-1,3,5-tricarbonsäuretris-[2-(2-methyl-acryloyloxy)-ethyl]ester wird als farbloser Feststoff mit einem Schmp. von 79 °C erhalten.

### Phasensequenz: K 79 I

**¹H-NMR** (300 MHz, CHCl₃): δ = 8,87 (s, 3H, H_{*arom*.}), 6,15-6,14 (m, 3H, *H_{Acrylat}*), 5,61-5,59 (m, 3H, H*_{Acrylat}*), 4,66-4,63 (m, 6H, -OCH₂CH₂-OC(O)), 4,53-4,50 (m, 6H, -OCH₂CH₂-OC(O)), 1,95 (dd, 9H, J = 0,9 Hz, J = 1,0 Hz, H*_{M}e*).
**MS (EI):** m/z(%) = 546(23, M⁺), 417 (95), 113 (100).

### Beispiel 4: Benzol-1,3,5-tricarbonsäuretris-(2-acryloyloxyethyl)ester

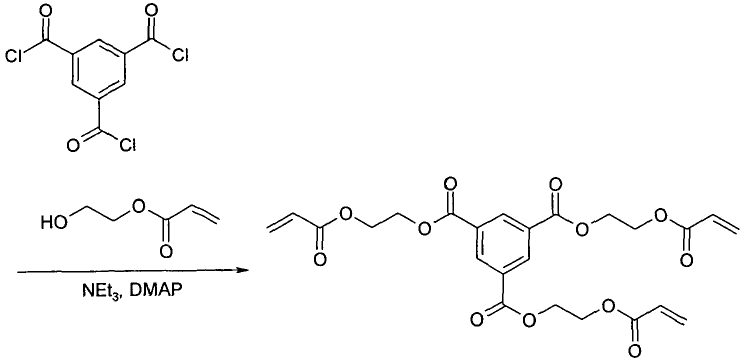

Die Reinigung erfolgt säulenchromatographisch (SiO₂, Pentan : Ethylacetat). Benzol-1,3,5-tricarbonsäuretris-(2-acryloyloxyethyl)ester wird als farbloses Öl erhalten.

### Phasensequenz: Tg -37 I

**¹H-NMR** (300 MHz, CHCl₃): δ = 8,87 (s, 3H, H_{*arom*.}), 6,46 (dd, 3H, J = 17,3 Hz, J = 1,5 Hz, H*_{Acrylat}*), 6,16 (dd, 6H, J = 17,3 Hz, J = 10,5 Hz, H*_{Acrylat}*), 5,88 (dd, 6H, J = 10,5 Hz, J = 1,5 Hz, H*_{Acrylat}*), 4,66-4,61 (m, 3H, - OCH₂CH₂-OC(O)), 4,56-4,52 (m, 3H, -OCH₂CH₂-OC(O)).
**MS (EI):** m/z(%) = 504(1, M⁺), 389 (100).

### Beispiel 5: Benzol-1,2,4,5-tetracarbonsäuretetrakis-[2-(2-methyl-acryloyloxy)-ethyl]ester

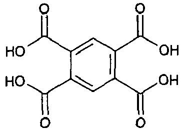

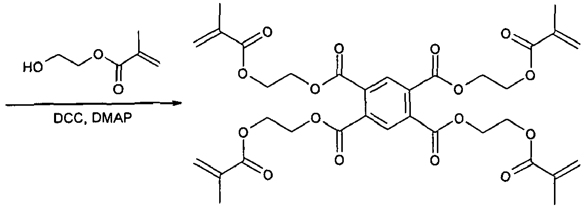

Die Reinigung erfolgt säulenchromatographisch. Benzol-1,2,4,5-tetracarbon-säuretetrakis-[2-(2-methyl-acryloyloxy)-ethyl]ester wird als farbloses Öl erhalten.

### Phasensequenz: Tg -32 I

**¹H-NMR** (400 MHz, CHCl₃): δ = 8,09 (s, 2H, H_{*arom*.}), 6,15-6,13 (m, 4H, H*_{Acrylat}*), 5,61-5,59 (m, 4H, H*_{Acrylat}*), 4,60-4,57 (m, 8H, -OCH₂CH₂-OC(O)), 4,48-4,44 (m, 8H, -OCH₂CH₂-OC(O)), 1,95 (dd, 12H, J = 0,9 Hz, J = 1,0 Hz, H*_{Me}*).
**MS (EI):** m/z(%) = 702 (4, M⁺), 572 (2), 113 (100).

### Beispiel 6: 5-(2-Methacryloyloxy)-valeriansäure-3,5-bis-[5-(2-methacryloyloxy)-valeriansäure]phenylester

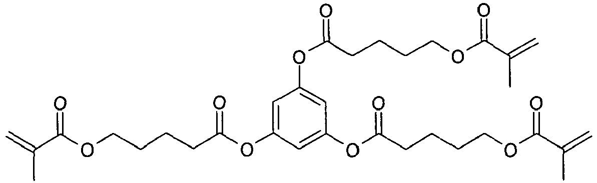

Die erfindungsgemäße Verbindung 5-(2-Methacryloyloxy)-valeriansäure-3,5-bis-[5-(2-methacryloyloxy)-valeriansäure]phenylester wird hergestellt wie nachfolgend beschrieben.

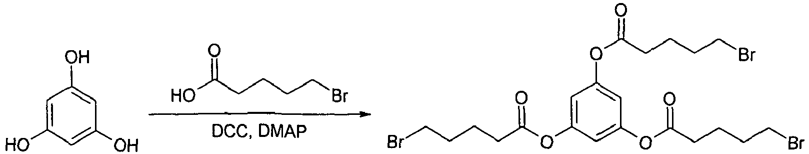

8,0 g (63,4 mmol) Phloroglucin werden zusammen mit 45,9 g (0,25 mol) 5-Bromvaleriansäure und 0,50 g (4,1 mmol) DMAP in 1000 ml THF vorgelegt. 254 ml (0,24 mol) DCC (1 M Lsg. in Toluol) werden zudosiert, und die Mischung wird 18 h bei Raumtemperatur gerührt. 16 g (0,13 mol) Oxalsäure-Dihydrat werden zugegeben, und nach 1 h wird vom Unlöslichen abfiltriert. Das Filtrat wird vollständig konzentriert, und der Rückstand wird säulenchromatographisch (SiO2, Toluol → Toluol : Ethylacetat = 95 : 5) gereinigt. 5-Bromvaleriansäure-3,5-bis-(5-brompentanoyloxy)phenylester wird als gelbliches Öl erhalten.

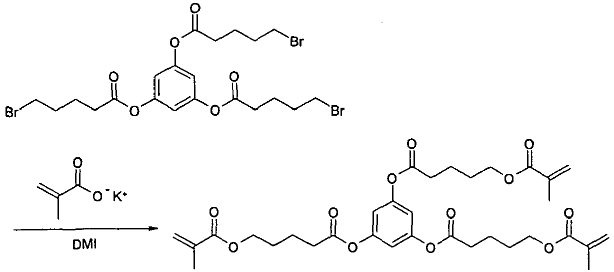

11,7 g (19,0 mmol) 5-Bromvaleriansäure-3,5-bis-(5-brompentanoyloxy)-phenylester werden zusammen mit 47,3 g (0,38 mol) Kaliummethacrylat und 200 mg BHT in 350 ml DMI 16 h bei 40 °C gerührt. Der Ansatz wird mit Ethylacetat verdünnt, und die Mischung wird mit Wasser und gesättigter Natriumchloridlösung gewaschen. Die Lösung wird mit Natriumsulfat getrocknet und vollständig konzentriert. Das Rohprodukt wird säulenchromatographisch (SiO₂, Toluol. Ethylacetat = 9 : 1) gereinigt. 5-(2-Methacryloyloxy)-valeriansäure-3,5-bis-[5-(2-methacryloyloxy)-valeriansäure]phenylester wird als farbloser Feststoff vom Schmp. 24 °C erhalten.

### Phasensequenz: Tg -57 K 24 I

### Mischungsbeispiele

Die folgenden Akronyme werden verwendet, um die Komponenten der flüssigkristallinen Grundmischung (Host) zu beschreiben. Der Zähler n nimmt einen Wert von 1 bis 9 an. Die Verbindungen eignen sich für die Herstellung von erfindungsgemäßen flüssigkristallinen Medien und Anzeigen.

**Tabelle A: Akronyme für LC-Komponenten**

| |
|---|
| 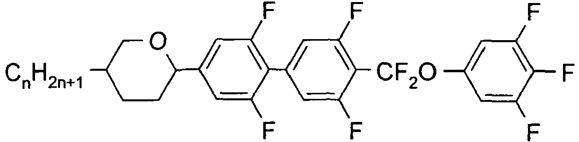 |
| **AUUQU-n-F** |
| 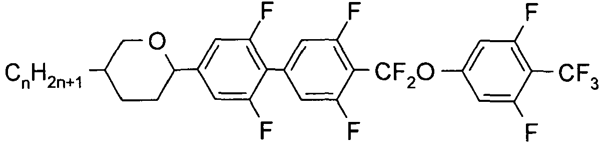 |
| **AUUQU-n-T** |
| 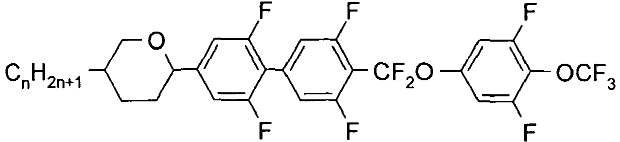 |
| **AUUQU-n-OT** |
| 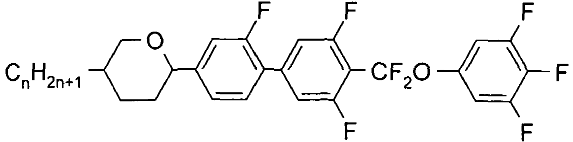 |
| **AGUQU-n-F** |
| 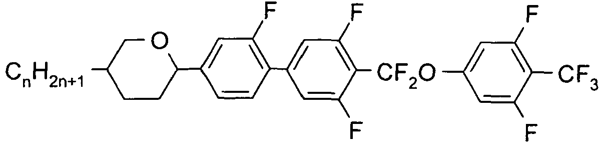 |
| **AGUQU-n-T** |
| 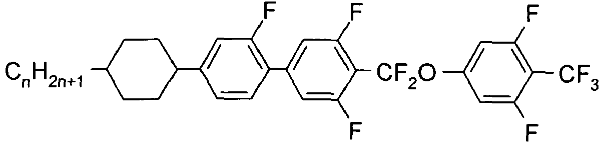 |
| **CGUQU-n-T** |
| 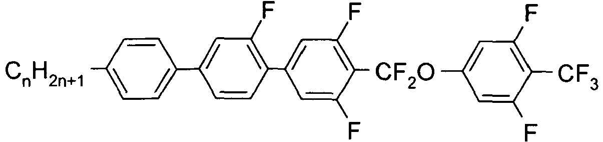 |
| **PGUQU-n-T** |
| 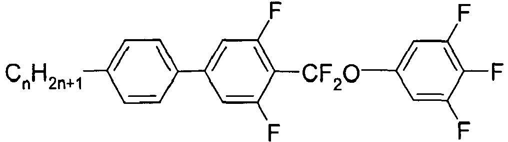 |
| **PUQU-n-F** |
| 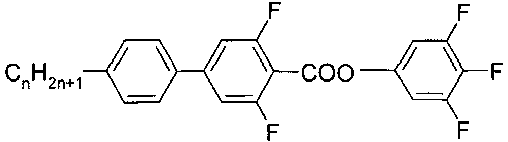 |
| **PUZU-n-F** |

Die folgenden Monomere werden vorzugsweise verwendet: 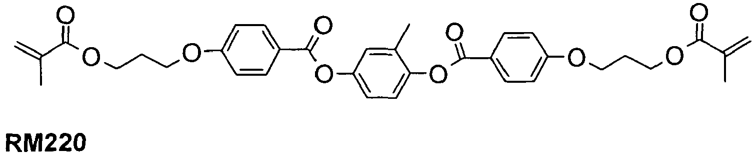 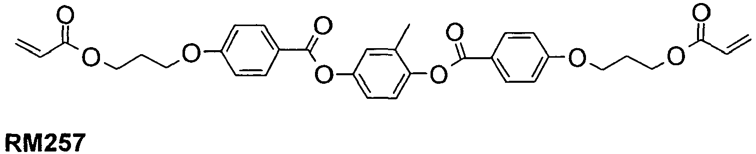 RM220 hat die Phasensequenz K 82,5 N 97 I.
RM257 hat die Phasensequenz K 66 N 127 I.

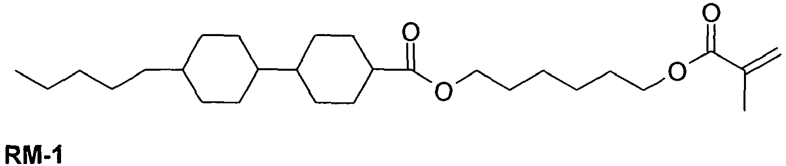

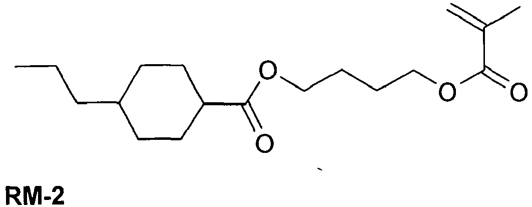

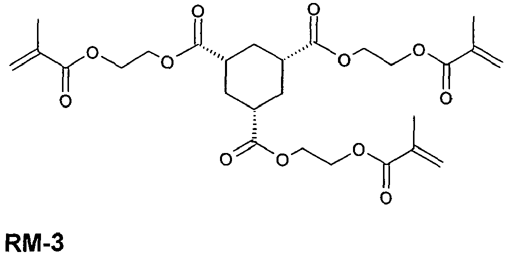

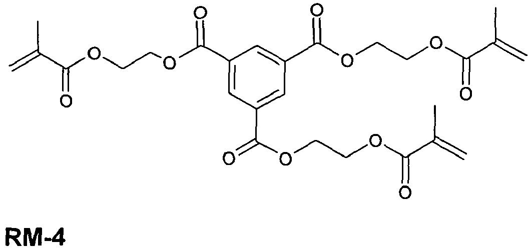

Die folgenden Zusatzstoffe werden vorzugsweise verwendet (DP: chirales Dopant, IN: Polymerisationsinitiator):

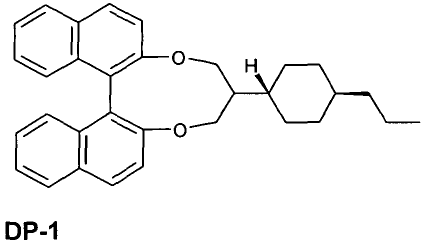

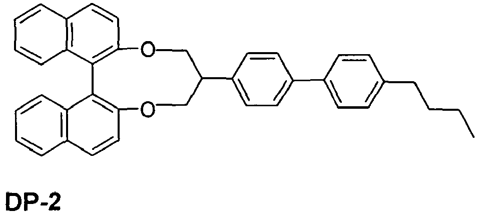

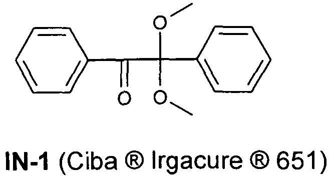

Weitere chirale Dopants und Polymerisationsinitiatoren für LC-Mischungen sind dem Fachmann bekannt und werden hier ausdrücklich erwähnt.

Die Medien werden vor der Polymerisation wie beschrieben charakterisiert. Darauf werden die RM-Komponenten durch einmalige Bestrahlung (180 s) in der blauen Phase polymerisiert, und die erhaltenen Medien werden erneut charakterisiert.

### Beschreibung der Polymerisation

Vor der Polymerisation einer Probe werden die Phaseneigenschaften des Mediums in einer Testzelle von ca. 10 Mikrometer Dicke und einer Fläche von 2x2,5 cm festgestellt. Die Füllung erfolg durch Kapillarwirkung bei einer Temperatur von 75 °C. Die Messung erfolgt unter einem Polarisationsmikroskop mit Heiztisch bei einem Temperaturverlauf von 1 °C/min.

Die Polymerisation der Medien wird durch Bestrahlung mit einer UV-Lampe (Hönle, Bluepoint 2.1, 365 nm Interferenzfilter) mit einer effektiven Leistung von ca. 1,5 mW/cm² für 180 Sekunden durchgeführt. Die Polymerisation erfolgt direkt in der elektrooptischen Testzelle. Die Polymerisation erfolgt anfangs bei einer Temperatur, in der das Medium in der blauen Phase I (BP-I) vorliegt. Die Polymerisation erfolgt in mehreren Teilschritten, die nach und nach zu einer vollständigen Polymerisation führen. Der Temperaturbereich der blauen Phase ändert sich in der Regel während der Polymerisation. Zwischen jedem Teilschritt wird daher die Temperatur so angepasst, dass das Medium nach wie vor in der blauen Phase vorliegt. In der Praxis kann dies so erfolgen, dass nach jedem Bestrahlungsvorgang von ca. 5 s oder länger die Probe unter dem Polarisationsmikroskop beobachtet wird. Wird die Probe dunkler, so deutet dies auf einen Übergang in die isotrope Phase hin. Die Temperatur für den nächsten Teilschritt wird entsprechend verringert. Die gesamte Bestrahlungszeit, die zu der maximalen Stabilisierung führt, beträgt typischerweise 180 s bei der angegebenen Bestrahlungsleistung. Weitere Polymerisationen können nach einem optimierten Bestrahlungs-Temperatur-Programm durchgeführt werden.

Alternativ kann die Polymerisation auch in einem einzigen Bestrahlungsschritt durchgeführt werden, insbesondere, wenn schon vor der Polymerisation eine breite blaue Phase vorliegt.

### Elektrooptische Charakterisierung

Nach der oben beschriebenen Polymerisation und Stabilisierung der blauen Phase wird die Phasenbreite der blauen Phase bestimmt. Die elektrooptische Charakterisierung erfolgt anschließend bei verschiedenen Temperaturen innerhalb und ggf. auch außerhalb dieses Bereichs.

Die verwendeten Testzellen sind auf einer Seite mit Interdigitalelektroden auf der Zellenoberfläche ausgestattet. Der Zellspalt, der Elektrodenabstand und die Elektrodenbreite betragen typischerweise jeweils 1 bis 10 Mikrometer und sind bevorzugt von gleicher Größe. Dieses einheitliche Maß wird nachfolgend als Spaltbreite bezeichnet. Die mit Elektroden belegte Fläche beträgt ca. 0,4 cm². Die Testzellen besitzen keine Orientierungsschicht ('alignment layer'). Die Zelle befindet sich für die elektrooptische Charakterisierung zwischen gekreuzten Polarisationsfiltern, wobei die Längsrichtung der Elektroden einen Winkel von 45° mit den Achsen des Polarisationsfilters einnimmt. Die Messung erfolgt mit einem DMS301 (Autronic-Melchers) im rechten Winkel zur Zellebene oder mittels einer hochempfindlichen Kamera am Polarisationsmikroskop. Im spannungslosen Zustand ergibt die beschriebene Anordnung ein im Wesentlichen dunkles Bild (Definition 0 % Transmission).

Zuerst werden die charakteristischen Betriebsspannungen und dann die Schaltzeiten an der Testzelle gemessen. Die Betriebsspannung an den Zellelektroden wird in Form von Rechteckspannung mit alternierendem Vorzeichen (Frequenz 100 Hz) und variabler Amplitude wie im Folgenden beschrieben angelegt.

Die Transmission im spannungslosen Zustand wird als 0 % festgelegt. Während die Betriebspannung erhöht wird, wird die Transmission gemessen. Das Erreichen des Maximalwerts der Transmission legt die charakteristische Größe der Betriebsspannung V₁₀₀ fest. Gleichermaßen wird die charakteristische Spannung V₁₀ bei 10 % der maximalen Transmission bestimmt. Diese Werte werden optional bei verschiedenen Temperaturen im Bereich der blauen Phase gemessen, jedenfalls bei Raumtemperatur (20°C).

Am oberen und unteren Ende des Temperaturbereichs der blauen Phase werden relativ hohe charakteristische Betriebsspannungen V₁₀₀ beobachtet. Im Bereich der minimalen Betriebsspannung steigt V₁₀₀ in der Regel nur langsam mit der Temperatur. Dieser Temperaturbereich, begrenzt durch T₁ und T₂ wird als nutzbarer, flacher Temperaturbereich (FB) bezeichnet. Die Breite dieses "Flachbereichs" (FB) beträgt (T₂ - T₁) und wird als Breite des Flachbereichs (BFB) (engl. 'flat range') bezeichnet. Die genauen Werte von T₁ und D₂ werden durch die Schnittpunkte von Tangenten an den flachen Kurvenabschnitt FB und die benachbarten steilen Kurvenabschnitte im V₁₀₀-Temperatur-Diagramm ermittelt.

Im zweiten Teil der Messung werden die Schaltzeiten beim Ein- und Ausschalten ermittelt (τₒₙ, τ_{off}). Die Schaltzeit τₒₙ ist definiert durch die Zeit bis zum Erreichen von 90 % Intensität nach dem Anlegen einer Spannung der Höhe von V₁₀₀ bei der gewählten Temperatur. Die Schaltzeit τ_{off} ist definiert durch die Zeit bis zur Abnahme um 90 % ausgehend von maximaler Intensität bei V₁₀₀ nach dem Erniedrigen der Spannung auf 0 V. Auch die Schaltzeit wird bei verschiedenen Temperaturen im Bereich der blauen Phase ermittelt.

Als weitere Charakterisierung wird bei einer Temperatur innerhalb FB die Transmission bei kontinuierlich steigender und fallender Betriebsspannung zwischen 0 V und V₁₀₀ gemessen. Den Unterschied zwischen beiden Kurven bezeichnet man als Hysterese. Die Differenz der Transmissionen bei 0,5·V₁₀₀ bzw. die Differenz der Spannungen bei 50 % Transmission sind beispielsweise charakteristische Hysteresewerte und werden als ΔT₅₀ respektive ΔV₅₀ bezeichnet.

Als weitere Kenngröße kann das Verhältnis der Transmission im spannungslosen Zustand vor und nach Durchlaufen eines Schaltzyklusses gemessen werden. Dieses Transmissionsverhältnis wird als "Memory-Effekt" bezeichnet. Der Wert des Memory-Effekts liegt im Idealzustand bei 1,0. Werte über 1 bedeuten, dass ein gewisser Memory-Effekt in Form einer zu hohen Resttransmission nach dem Ein- und Ausschalten der Zelle vorliegt. Auch dieser Wert wird im Arbeitsbereich der blauen Phase (FB) ermittelt.

Die Messwerte, soweit nicht anders angegeben, werden bei 20 °C ermittelt.

### Mischungsbeispiele

### Hostmischung H1

| **Komponente** | **Gew.-%** |
|---|---|
| PUQU-3-F | 5.00 |
| AGUQU-3-F | 13.00 |
| AUUQU-2-F | 6.00 |
| AUUQU-3-F | 10.00 |
| AUUQU-4-F | 6.00 |
| AUUQU-5-F | 9.00 |
| AUUQU-7-F | 6.00 |
| AUUQU-3-T | 8.00 |
| AUUQU-3-OT | 12.00 |
| PUZU-2-F | 6.00 |
| PUZU-3-F | 10.00 |
| PUZU-5-F | 9.00 |
| Σ | 100.00 |

Klärpunkt: 71 °C,
Δε·Δn: 39,5.

### Mischungsbeispiele M1 und M2

Die folgenden polymerisierbaren Medien werden zusammengestellt:

| | **M1 (zum Vergleich)** | **M2** |
|---|---|---|
| **Komponente** | **Anteil [Gew.%]** | **Anteil [Gew.-%]** |
| Hostmischung H1 | 86,3 | 86,3 |
| DP-1 | 2,5 | 2,5 |
| IN-1 | 0,2 | 0,2 |
| RM-257 | 6 | - |
| RM-1 | - | 8 |
| RM-2 | 5 | - |
| RM-3 | - | 3 |

Die Medien werden vor der Polymerisation wie beschrieben charakterisiert. Darauf werden die RM-Komponenten durch einmalige Bestrahlung (180 s) am unteren Ende des Temperaturbereichs der blauen Phase in der blauen Phase polymerisiert, und die erhaltenen Medien werden erneut charakterisiert.

Die polymerstabilisierten flüssigkristallinen Medien zeigen über einen breiten Temperaturbereich eine blaue Phase.

| Messwerte Verwendungsbeispiele | **M1** | **M2** |
|---|---|---|
| Übergang nematisch-blaue Phase vor der Polymerisation | 38 °C | 31 °C |
| Temperaturbereich der blauen Phase | -6 °C - 53 °C | -5 °C - 53 °C |
| V₁₀ (20 °C) | 25,2 V | 11,4 V |
| V₁₀₀ (20 °C) | 58,6 V | 37,7 V |
| ΔV₅₀ (20 °C) | 6,8 V | 0,9 V |
| Spaltbreite | 10 µm | 10 µm |

Das polymerstabilisierte Medium M2 zeigt eine deutliche Verringerung der Hysterese (ΔV₅₀) und der Betriebsspannung gegenüber dem polymerstabilisierten Medium M1 (Vergleichsversuch).

## Patentansprüche

1. Flüssigkristallines Medium, **dadurch gekennzeichnet, dass** es eine oder mehrere Verbindungen der Formel I 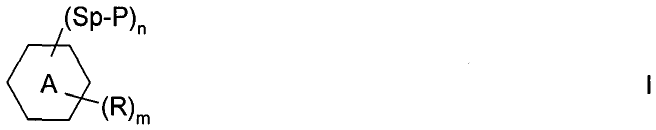 worin
R
a) jeweils unabhängig voneinander einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind,
b) eine Gruppe -Sp-P, oder
c) F, Cl, H, Br, CN, SCN, NCS oder SF₅ bedeuten,
A
a) Cyclohexan oder Cyclohexen,
b) Benzol, worin eine oder zwei CH-Gruppen durch N ersetzt sein können,
oder
c) ein Rest aus der Gruppe Bicyclo[1.1.1]pentan, Bicyclo[2.2.2]octan, Spiro[3.3]heptan, Selenophen, Thiophen, Furan, Anthracen, Phenanthren, Chroman, Adamantan, 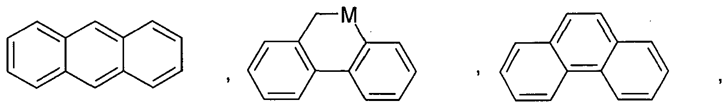 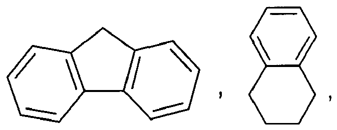 worin
eine oder mehrere Doppelbindungen durch Einfachbindungen ersetzt sein können,
ein oder mehrere CH-Gruppen durch N ersetzt sein können,
M -O-, -S-, -CH₂-, -CHY- oder -CYY¹-,
und
Y und Y¹ Cl, F, CN, OCF₃ oder CF₃ bedeuten,
m 0, 1, 2 oder 3, für polycyclische Ringe A auch mehr,
n 3, 4 oder mehr,
P eine polymerisierbare Gruppe,
Sp eine Abstandsgruppe,
bedeuten,
oder ein Polymer umfassend eine oder mehrere polymerisierte Verbindungen der Formel I enthält.

2. Flüssigkristallines Medium nach Anspruch 1, **dadurch gekennzeichnet, dass** in Formel I der Ring A Cyclohexan oder Benzol bedeutet.

3. Flüssigkristallines Medium nach Anspruch 1 oder 2, **dadurch gekennzeichnet, dass** in Formel I
P einen Rest der Formel CH₂=CW¹-COO-, worin W¹ H, F, Cl, CN, CF₃, Phenyl oder Alkyl mit 1 bis 5 C-Atomen ist,
bedeutet.

4. Flüssigkristallines Medium nach einem oder mehreren der Ansprüche 1 bis 3, **dadurch gekennzeichnet, dass** in Formel I die Anzahl der polymerisierbaren Gruppen 3, 4 oder 5 beträgt.

5. Flüssigkristallines Medium nach einem oder mehreren der Ansprüche 1 bis 4, **dadurch gekennzeichnet, dass** es bei mindestens einer Temperatur eine blaue Phase aufweist.

6. Flüssigkristallines Medium nach einem oder mehreren der Ansprüche 1 bis 5, **dadurch gekennzeichnet, dass** es nach Stabilisierung der blauen Phase durch Polymerisation mindestens im Bereich von 20 bis 25 °C eine blaue Phase aufweist.

7. Flüssigkristallines Medium nach einem oder mehreren der Ansprüche 1 bis 6, **dadurch gekennzeichnet, dass** es eine oder mehrere weitere Verbindungen ausgewählt aus den Formel II und III: 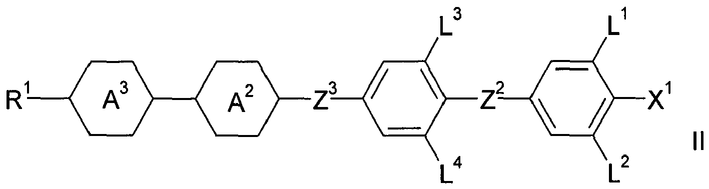 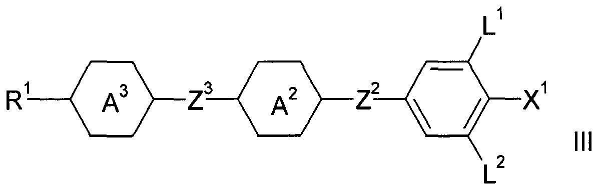 worin
R¹ jeweils unabhängig voneinander einen unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -CF=CF-, -CF=CH-, -CH=CF-, -(CO)O-, -O(CO)-, -(CO)- oder -O- so ersetzt sein können, dass O-Atome nicht direkt miteinander verknüpft sind, bevorzugt einen geradkettigen Alkylrest mit 2 bis 7 C-Atomen,
A², A³ unabhängig voneinander 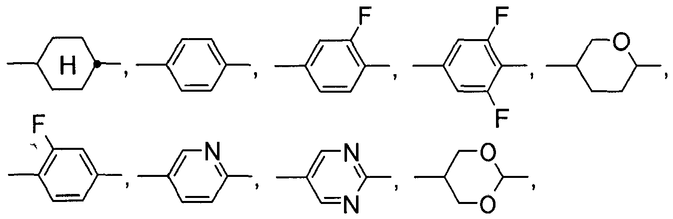
Z², Z³ unabhängig voneinander eine Einfachbindung, CF₂O, CH₂CH₂, CF₂CH₂, CF₂CF₂, CFHCFH, CFHCH₂, (CO)O, CH₂O, C=C, CH=CH, CF=CH, CF=CF; wobei unsymmetrische Bindeglieder (z.B. CF₂O) in beide möglichen Richtungen orientiert sein können,
X¹ F, Cl, CN, oder
Alkyl, Alkenyl, Alkenyloxy, Alkylalkoxy oder Alkoxy mit 1 bis 3 C-Atomen, welches durch F ein- oder mehrfach substituiert ist, und
L¹ bis L⁴ H oder F,
bedeuten, enthält.

8. Verwendung von Verbindungen der Formel I 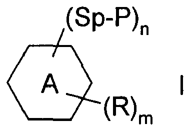
R
a) jeweils unabhängig voneinander einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind,
b) eine Gruppe -Sp-P, oder
c) F, Cl, H, Br, CN, SCN, NCS oder SF₅ bedeuten,
A
a) Cyclohexan oder Cyclohexen,
b) Benzol, worin eine oder zwei CH-Gruppen durch N ersetzt sein können,
oder
c) ein Rest aus der Gruppe Bicyclo[1.1.1]pentan, Bicyclo[2.2.2]octan, Spiro[3.3]heptan, Dioxan, Selenophen, Thiophen, Furan, Anthracen, Phenanthren, Chroman, Adamantan, 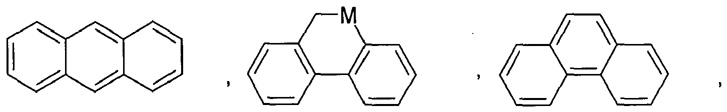 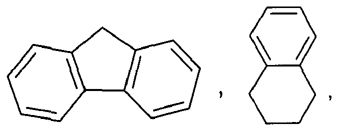 worin
eine oder mehrere Doppelbindungen durch Einfachbindungen ersetzt sein können,
ein oder mehrere CH-Gruppen durch N ersetzt sein können,
M -O-, -S-, -CH₂-, -CHY- oder -CYY¹-,
und
Y und Y¹ Cl, F, CN, OCF₃ oder CF₃ bedeuten,
m 0, 1, 2 oder 3, für polycyclische Ringsysteme A auch mehr,
n 3, 4 oder mehr,
P eine polymerisierbare Gruppe,
Sp eine Abstandsgruppe,
bedeuten,
oder eines Polymers umfassend eine oder mehrere polymerisierte Verbindungen der Formel I, in Flüssigkristall(FK-)anzeigen mit blauer Phase oder in FK-Anzeigen des PS- oder PSA-Typs.

9. Verfahren zur Herstellung eines FK-Mediums, **dadurch gekennzeichnet, dass** man eine oder mehrere flüssigkristalline Verbindungen mit einer oder mehreren polymerisierbaren Verbindungen der Formel I nach einem der Ansprüche 1 bis 4 und optional mit Additiven mischt und optional polymerisiert.

10. Elektrooptische Flüssigkristallanzeige, die in einer polymerstabilierten blauen Phase arbeitet oder vom PS-/PSA-Typ ist, **dadurch gekennzeichnet, dass** sie eine Verbindung der Formel I oder ein Polymer umfassend eine oder mehrere polymerisierte Verbindungen der Formel I nach einem oder mehreren der Ansprüche 1 bis 4 enthält.

11. Verfahren zur Herstellung einer elektrooptischen Vorrichtung mit einem flüssigkristallinen polymerstabilisierten Medium, **dadurch gekennzeichnet, dass** man ein flüssigkristallines Medium enthaltend eine oder mehrere Verbindungen der Formel I nach einem oder mehreren der Ansprüche 1 bis 4 in der elektrooptischen Vorrichtung polymerisiert.

12. Verwendung des flüssigkristallinen Mediums nach einem oder mehreren der Ansprüche 1 bis 7 für eine elektrooptische Vorrichtung.

## Claims

1. Liquid-crystalline medium, **characterised in that** it comprises one or more compounds of the formula I 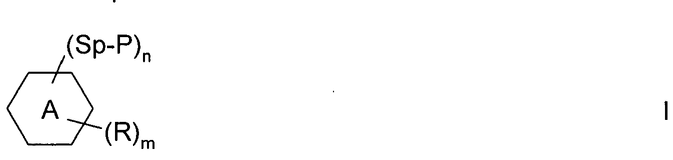 in which
R denotes
a) in each case, independently of one another, a halogenated or unsubstituted alkyl radical having 1 to 15 C atoms, where, in addition, one or more CH₂ groups in these radicals may each be replaced, independently of one another, by -C≡C-, -CH=CH-, -(CO)O-, -O(CO)-, -(CO)- or -O- in such a way that O atoms are not linked directly to one another,
b) a group -Sp-P, or
c) F, Cl, H, Br, CN, SCN, NCS or SF₅,
A denotes
a) cyclohexane or cyclohexene,
b) benzene, in which one or two CH groups may be replaced by N,
or
c) a radical from the group bicyclo[1.1.1]pentane, bicyclo[2.2.2]octane, spiro[3.3]heptane, selenophene, thiophene, furan, anthracene, phenanthrene, chroman, adamantane, 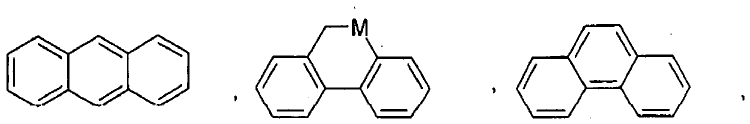 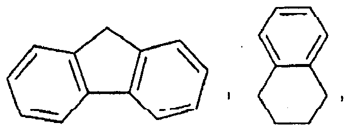 in which
one or more double bonds may be replaced by single bonds,
one or more CH groups may be replaced by N,
M denotes -O-, -S-, -CH₂-, -CHY- or -CYY¹-,
and
Y and Y¹ denote Cl, F, CN, OCF₃ or CF₃,
m denotes 0, 1, 2 or 3, for polycyclic rings A also more,
n denotes 3, 4 or more,
P denotes a polymerisable group,
Sp denotes a spacer group,
or a polymer comprising one or more polymerised compounds of the formula I.

2. Liquid-crystalline medium according to Claim 1, **characterised in that** the ring A in formula I denotes cyclohexane or benzene.

3. Liquid-crystalline medium according to Claim 1 or 2, **characterised in that**, in formula I,
P denotes a radical of the formula CH₂=CW¹-COO-, in which W¹ is H, F, Cl, CN, CF₃, phenyl or alkyl having 1 to 5 C atoms.

4. Liquid-crystalline medium according to one or more of Claims 1 to 3, **characterised in that** the number of polymerisable groups in formula I is 3, 4 or 5.

5. Liquid-crystalline medium according to one or more of Claims 1 to 4, **characterised in that** it has a blue phase at at least one temperature.

6. Liquid-crystalline medium according to one or more of Claims 1 to 5, **characterised in that** it has a blue phase at least in the range from 20 to 25°C after stabilisation of the blue phase by polymerisation.

7. Liquid-crystalline medium according to one or more of Claims 1 to 6, **characterised in that** it comprises one or more further compounds selected from the formulae II and III: 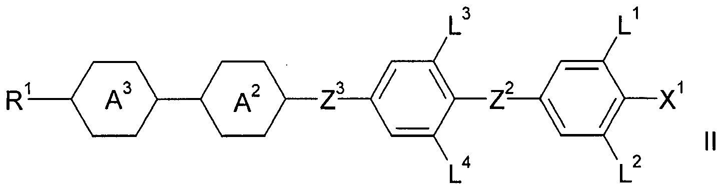 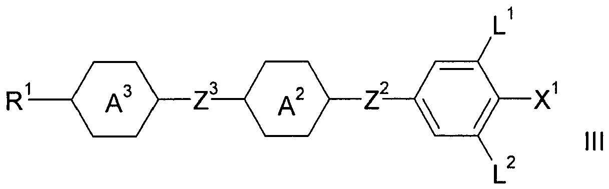 in which
R¹ in each case, independently of one another, denotes an unsubstituted alkyl radical having 1 to 15 C atoms, where, in addition, one or more CH₂ groups in this radical may each be replaced, independently of one another, by -C≡C-, -CH=CH-, -CF=CF-, -CF=CH-, -CH=CF-, -(CO)O-, -O(CO)-, -(CO)- or -O- in such a way that O atoms are not linked directly to one another, preferably a straight-chain alkyl radical having 2 to 7 C atoms,
A², A³, independently of one another, denote 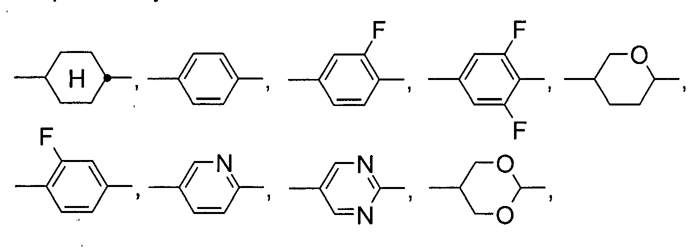
Z², Z³, independently of one another, denote a single bond, CF₂O, CH₂CH₂, CF₂CH₂, CF₂CF₂, CFHCFH, CFHCH₂, (CO)O, CH₂O, C=C, CH=CH, CF=CH, CF=CF, where asymmetrical connecting members (for example CF₂O) may be oriented in both possible directions,
X¹ denotes F, Cl, CN, or
alkyl, alkenyl, alkenyloxy, alkylalkoxy or alkoxy having 1 to 3 C atoms, which is mono- or polysubstituted by F, and
L¹ to L⁴ denote H or F.

8. Use of compounds of the formula I 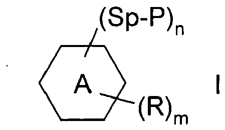 in which
R denotes
a) in each case, independently of one another, a halogenated or unsubstituted alkyl radical having 1 to 15 C atoms, where, in addition, one or more CH₂ groups in these radicals may each be replaced, independently of one another, by -C≡C-, -CH=CH-, -(CO)O-, -O(CO)-, -(CO)- or -O- in such a way that O atoms are not linked directly to one another,
b) a group -Sp-P, or
c) F, Cl, H, Br, CN, SCN, NCS or SF₅,
A denotes
a) cyclohexane or cyclohexene,
b) benzene, in which one or two CH groups may be replaced by N,
or
c) a radical from the group bicyclo[1.1.1]pentane, bicyclo[2.2.2]octane, spiro[3.3]heptane, dioxane, selenophene, thiophene, furan, anthracene, phenanthrene, chroman, adamantane, 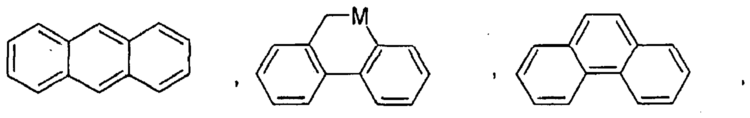 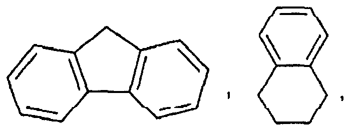 in which
one or more double bonds may be replaced by single bonds,
one or more CH groups may be replaced by N,
M denotes -O-, -S-, -CH₂-, -CHY- or -CYY¹-,
and
Y and Y¹ denote Cl, F, CN, OCF₃ or CF₃,
m denotes 0, 1, 2 or 3, for polycyclic ring systems A also more,
n denotes 3, 4 or more,
P denotes a polymerisable group,
Sp denotes a spacer group,
or of a polymer comprising one or more polymerised compounds of the formula I, in liquid-crystal (LC) displays having a blue phase or in LC displays of the PS or PSA type.

9. Process for the preparation of an LC medium, **characterised in that** one or more liquid-crystalline compounds are mixed with one or more polymerisable compounds of the formula I according to one of Claims 1 to 4 and optionally with additives and optionally polymerised.

10. Electro-optical liquid-crystal display which operates in a polymer-stabilised blue phase or is of the PS/PSA type, **characterised in that** it contains a compound of the formula I or a polymer comprising one or more polymerised compounds of the formula I according to one or more of Claims 1 to 4.

11. Process for the production of an electro-optical device containing a liquid-crystalline polymer-stabilised medium, **characterised in that** a liquid-crystalline medium comprising one or more compounds of the formula I according to one or more of Claims 1 to 4 is polymerised in the electro-optical device.

12. Use of the liquid-crystalline medium according to one or more of Claims 1 to 7 for an electro-optical device.

## Revendications

1. Milieu cristallin liquide, **caractérisé en ce qu'**il comprend un ou plusieurs composé(s) de la formule I : 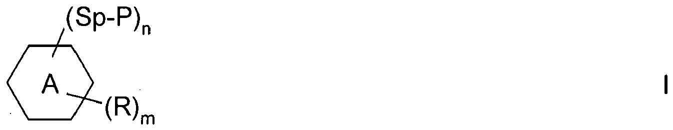 dans laquelle :
R représente :
a) dans chaque cas, indépendamment les uns des autres, un radical alkyle halogéné ou non substitué comportant 1 à 15 atome(s) de C, où, en outre, un ou plusieurs groupe(s) CH₂ dans ces radicaux peut/ peuvent chacun être remplacé(s), indépendamment les uns des autres, par -C≡C-, -CH=CH-, -(CO)O-, -O(CO)-, -(CO)- ou -O- de telle sorte que des atomes de O ne soient pas liés directement les uns aux autres,
b) un groupe -Sp-P, ou
c) F, Cl, H, Br, CN, SCN, NCS ou SF₅,
A représente :
a) cyclohexane ou cyclohexène,
b) benzène, où un ou deux groupe(s) CH peut/peuvent être remplacé(s) par N,
ou
c) un radical pris parmi le groupe bicyclo[1.1.1]pentane, bicyclo[2.2.2]octane, spiro-[3.3]heptane, sélénophène, thiophène, furane, anthracène, phénanthrène, chromane, adamantane, 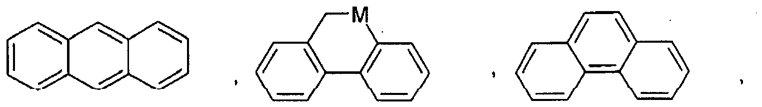 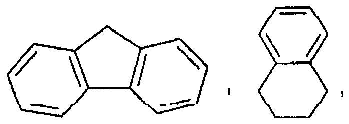 où :
une ou plusieurs liaison(s) double(s) peut/peuvent être remplacée(s) par des liaisons simples,
un ou plusieurs groupe(s) CH peut/peuvent être remplacé(s) par N,
M représente -O-, -S-, -CH₂-, -CHY- ou -CYY¹-,
et
Y et Y¹ représentent Cl, F, CN, OCF₃ ou CF₃,
m représente 0, 1, 2 ou 3, et pour des cycles polycycliques A, il représente également plus,
n représente 3, 4 ou plus,
P représente un groupe polymérisable,
Sp représente un groupe d'espaceur,
ou un polymère comprenant un ou plusieurs composé(s) polymérisé(s) de la formule I.

2. Milieu cristallin liquide selon la revendication 1, **caractérisé en ce que** le cycle A dans la formule I représente cyclohexane ou benzène.

3. Milieu cristallin liquide selon la revendication 1 ou 2, **caractérisé en ce que**, dans la formule I :
P représente un radical de la formule CH₂=CW¹-COO-, où W¹ est H, F, Cl, CN, CF3, phényle ou alkyle comportant 1 à 5 atome(s) de C.

4. Milieu cristallin liquide selon une ou plusieurs des revendications 1 à 3, **caractérisé en ce que** le nombre de groupes polymérisables dans la formule I est de 3, 4 ou 5.

5. Milieu cristallin liquide selon une ou plusieurs des revendications 1 à 4, **caractérisé en ce qu'**il présente une phase bleue à au moins une température.

6. Milieu cristallin liquide selon une ou plusieurs des revendications 1 à 5, **caractérisé en ce qu'**il présente une phase bleue au moins dans la plage de 20 à 25°C après stabilisation de la phase bleue par polymérisation.

7. Milieu cristallin liquide selon une ou plusieurs des revendications 1 à 6, **caractérisé en ce qu'**il comprend un ou plusieurs autre(s) composé(s) choisi(s) parmi les formules II et III : 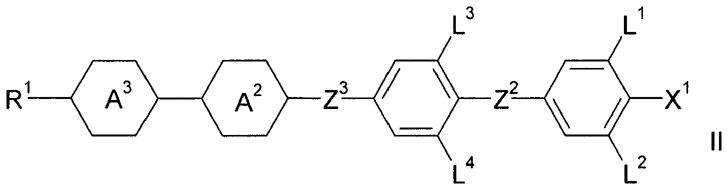 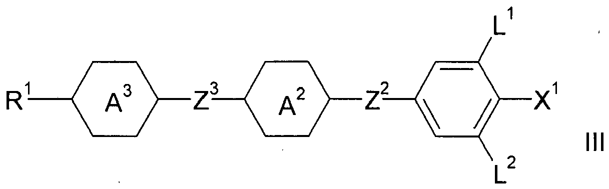 dans lesquelles :
R¹ dans chaque cas, indépendamment les uns des autres, représente un radical alkyle non substitué comportant 1 à 15 atome(s) de C, où, en outre, un ou plusieurs groupe(s) CH₂ dans ce radical peut/peuvent chacun être remplacé(s), indépendamment les uns des autres, par -C≡C-, -CH=CH-, -CF=CF-, -CF=CH-, -CH=CF-, -(CO)O-, -O(CO)-, -(CO)- ou -O- de telle sorte que des atomes de O ne soient pas liés directement les uns aux autres, de façon préférable un radical alkyle en chaîne droite comportant 2 à 7 atomes de C,
A², A³ représentent, indépendamment l'un de l'autre : 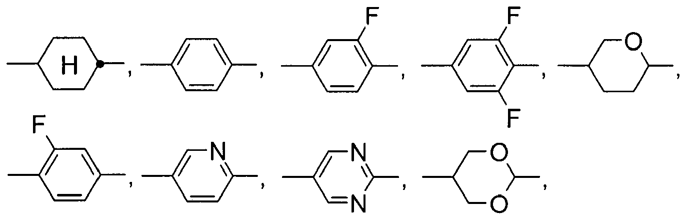
Z², Z³ représentent, indépendamment l'un de l'autre, une liaison simple, CF₂O, CH₂CH₂, CF₂CH₂, CF₂CF₂, CFHCFH, CFHCH₂, (CO)O, CH₂O, C=C, CH=CH, CF=CH, CF=CF, où des éléments de connexion asymétriques (par exemple CF₂O) peuvent être orientés dans les deux directions possibles,
X¹ représente F, CI, CN, ou alkyle, alkényle, alkényloxy, alkylalcoxy ou alcoxy comportant 1 à 3 atome(s) de C, lequel est monosubstitué ou polysubstitué par F, et
L¹ à L⁴ représentent H ou F.

8. Utilisation de composés de la formule I : 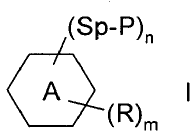 dans laquelle :
R représente :
a) dans chaque cas, indépendamment les uns des autres, un radical alkyle halogéné ou non substitué comportant 1 à 15 atome(s) de C, où, en outre, un ou plusieurs groupe(s) CH₂ dans ces radicaux peut/ peuvent chacun être remplacé(s), indépendamment les uns des autres, par -C≡C-, -CH=CH-, -(CO)O-, -O(CO)-, -(CO)- ou -O- de telle sorte que des atomes de O ne soient pas liés directement les uns aux autres,
b) un groupe -Sp-P, ou
c) F, CI, H, Br, CN, SCN, NCS ou SF₅,
A représente :
a) cyclohexane ou cyclohexène,
b) benzène, où un ou deux groupe(s) CH peut/peuvent être remplacé(s) par N,
ou
c) un radical pris parmi le groupe bicyclo[1.1.1]-pentane, bicyclo[2.2.2]octane, spiro[3.3]heptane, dioxane, sélénophène, thiophène, furane, anthracène, phénanthrène, chromane, adamantane, 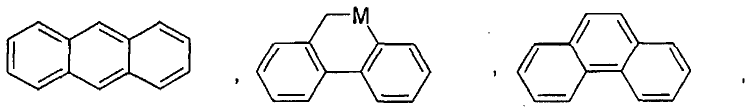 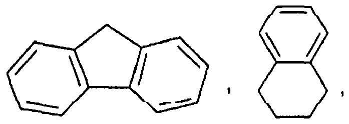 où :
une ou plusieurs liaisons doubles peut/peuvent être remplacée(s) par des liaisons simples,
un ou plusieurs groupe(s) CH peut/peuvent être remplacé(s) par N,
M représente -O-, -S-, -CH₂-, -CHY- ou -CYY¹-,
et
Y et Y¹ représentent Cl, F, CN, OCF₃ ou CF₃,
m représente 0, 1, 2 ou 3, et pour des systèmes de cycle polycyclique A, il représente également plus,
n représente 3, 4 ou plus,
P représente un groupe polymérisable,
Sp représente un groupe d'espaceur,
ou d'un polymère comprenant un ou plusieurs composé(s) polymérisé(s) de la formule I, dans des affichages à cristaux liquides (LC) comportant une phase bleue ou dans des affichages LC du type PS ou PSA.

9. Procédé pour la fabrication d'un milieu LC, **caractérisé en ce qu'**un ou plusieurs composé(s) cristallin(s) liquide(s) est/sont mélangé(s) avec un ou plusieurs composé(s) polymérisable(s) de la formule I selon l'une des revendications 1 à 4 et en option avec des additifs et est/ sont en option polymérisé(s).

10. Affichage à cristaux liquides électro-optique, lequel fonctionne selon une phase bleue stabilisée par polymère ou est du type PS/PSA, **caractérisé en ce qu'**il contient un composé de la formule I ou un polymère comprenant un ou plusieurs composé(s) polymérisé(s) de la formule I selon une ou plusieurs des revendications 1 à 4.

11. Procédé pour la fabrication d'un dispositif électro-optique contenant un milieu cristallin liquide stabilisé par polymère, **caractérisé en ce qu'**un milieu cristallin liquide comprenant un ou plusieurs composé(s) de la formule I selon une ou plusieurs des revendications 1 à 4 est polymérisé dans le dispositif électro-optique.

12. Utilisation du milieu cristallin liquide selon une ou plusieurs des revendications 1 à 7 pour un dispositif électro-optique.
